(19) Europäisches Patentamt
European Patent Office
Office européen des brevets

(11) **EP 4 734 632 A1**

(12) **EUROPEAN PATENT APPLICATION**
published in accordance with Art. 153(4) EPC

(43) Date of publication:
**29.04.2026 Bulletin 2026/18**

(21) Application number: **23945345.9**

(22) Date of filing: **14.07.2023**

(51) International Patent Classification (IPC):
**H04W 72/044** (2023.01)

(52) Cooperative Patent Classification (CPC):
**H04W 72/044**

(86) International application number:
**PCT/CN2023/107434**

(87) International publication number:
**WO 2025/015445 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHANG, Gongzheng
 Shenzhen, Guangdong 518129 (CN)**
• **LI, Rong
 Shenzhen, Guangdong 518129 (CN)**
• **WANG, Jian
 Shenzhen, Guangdong 518129 (CN)**
• **XU, Chen
 Shenzhen, Guangdong 518129 (CN)**

(74) Representative: **Körber, Martin Hans
 Mitscherlich PartmbB
 Karlstraße 7
 80333 München (DE)**

(54) **COMMUNICATION METHOD AND RELATED DEVICE**

(57) This application provides a communication method and a related device, to determine, in first information by using an identifier of an artificial intelligence (artificial intelligence, AI) task, access information of the AI task, so that a terminal device can subsequently access the AI task based on the access information of the AI task, and further a computing capability of the terminal device can be used for the AI task, to implement execution of the AI task in a communication network. In the method, the terminal device receives the first information, where the first information indicates the access information of the AI task, and the first information is obtained by processing the access information of the AI task by using the identifier of the AI task; and the terminal device determines the access information of the AI task based on the identifier of the AI task and the first information.

FIG. 3

## Description

## TECHNICAL FIELD

This application relates to the communication field, and in particular, to a communication method and a related device.

## BACKGROUND

Wireless communication may refer to transmission communication performed between a plurality of communication nodes without propagation by using a conductor or a cable. Usually, a network device and a terminal device may serve as different communication nodes to perform communication in a wireless communication manner.

Currently, in a wireless communication system, a communication node usually has a signal receiving and sending capability and a computing capability. A network device having a computing capability is used as an example. The computing capability of the network device is mainly to provide computing power support for a signal receiving and sending capability (for example, perform computation on a time domain resource, a frequency domain resource, and the like for carrying a signal), to implement a communication task between the network device and another communication node.

However, in a communication network, in addition to providing computing power support for the foregoing communication task, the computing capability of the communication node may further have a surplus computing capability. Therefore, how to use these computing capabilities is an urgent technical problem to be resolved.

## SUMMARY

This application provides a communication method and a related device, to obtain, from first information by using an identifier of an artificial intelligence (artificial intelligence, AI) task, access information of the AI task, so that a terminal device can subsequently access the AI task based on the access information of the AI task, and further a computing capability of the terminal device can be used for the AI task, to implement execution of the AI task in a communication network.

A first aspect of this application provides a communication method. The method is performed by a terminal device, or the method is performed by some components (for example, a processor, a chip, or a chip system) in the terminal device, or the method may be implemented by a logic module or software that can implement all or some functions of the terminal device. In the first aspect and possible implementations of the first aspect, an example in which the method is performed by the terminal device is used for description. In the method, the terminal device receives first information, where the first information indicates access information of the AI task, and the first information is obtained by processing the access information of the AI task by using an identifier of the AI task; and the terminal device determines the access information of the AI task based on the identifier of the AI task and the first information.

Based on the foregoing technical solution, after the terminal device receives the first information that indicates the access information of the AI task, the terminal device may determine the access information of the AI task based on the identifier of the AI task, where the first information is obtained by processing the access information of the AI task by using the identifier of the AI task. In other words, when a network device indicates the access information of the AI task by using the first information, the terminal device may obtain the access information of the AI task from the first information by using the identifier of the AI task, so that the terminal device can subsequently access the AI task based on the access information of the AI task, and further a computing capability of the terminal device can be used for the AI task, to implement execution of the AI task in a communication network.

In addition, the first information sent by the network device is processed by using the identifier of the AI task. After the terminal device receives the first information, the terminal device can obtain the access information of the AI task by using the identifier of the AI task. Therefore, when a quantity of terminal devices is greater than one, different terminal devices all can obtain the access information of the AI task by using the identifier of the AI task, thereby reducing implementation complexity and improving efficiency.

Optionally, that the first information is obtained by processing the access information of the AI task by using the identifier of the AI task includes: The first information is obtained by processing the access information of the AI task by using the identifier of the AI task and not by using an identifier of the terminal device, or the first information is obtained by processing the access information of the AI task by using the identifier of the AI task and by using the identifier of the terminal device. In comparison, in the former solution, because the identifier of the terminal device does not need to participate in processing of the access information, the access information can be processed by using the identifier of the AI task. In this way, different terminal devices (or users) all can obtain the access information of the AI task by using the identifier of the AI task, thereby protecting privacy of the terminal device (or the user).

It should be understood that the first information may be obtained by processing the access information of the AI task in a plurality of manners by using the identifier of the AI task. For example, the processing may include at least one of scrambling processing, encryption processing, and encapsulation processing (or referred to as data packaging processing). In other words, the terminal device may determine the access information of the AI task in a plurality of manners, for example, at least one of descrambling processing, decryption processing, and decapsulation processing (or referred to as data unpackaging processing), based on the identifier of the AI task and the first information.

In an implementation example, the processing may be scrambling processing. Correspondingly, after the terminal device receives the first information, the terminal device may perform descrambling processing on the first information based on the identifier of the AI task, to obtain the access information of the AI task. In other words, the network device may scramble different information (where the different information may include the first information) by using different identifiers. After the terminal device receives the different information, in a process in which the terminal device descrambles the different information based on the different identifiers, the terminal device descrambles the first information based on the identifier of the AI task, to obtain the access information of the AI task.

In another implementation example, the processing may be encryption processing. Correspondingly, after the terminal device receives the first information, the terminal device may perform decryption processing on the first information based on the identifier of the AI task, to obtain the access information of the AI task. In other words, the network device may encrypt different information (where the different information may include the first information) by using different identifiers. After the terminal device receives the different information, in a process in which the terminal device decrypts the different information based on the different identifiers, the terminal device decrypts the first information based on the identifier of the AI task, to obtain the access information of the AI task.

In another implementation example, the processing may be encapsulation processing (or referred to as data packaging processing). Correspondingly, after the terminal device receives the first information, the terminal device may perform decapsulation processing (or referred to as data unpackaging processing) on the first information, to obtain data carried in the first information, and then the terminal device determines, in the data obtained after the decapsulation, the access information of the AI task based on the identifier of the AI task. In other words, the network device may encapsulate different information (where the different information may include the first information) by using different identifiers. After receiving the different information, the terminal device decapsulates the different information, to obtain data after the decapsulation, and the terminal device determines, in the data after the decapsulation, the access information of the AI task based on the identifier of the AI task.

It should be understood that the access information of the AI task may be understood as information used to access the AI task. To be specific, after the terminal device determines the access information of the AI task, the terminal device may access the AI task based on the access information of the AI task.

It should be understood that the AI task in this application may be a task that needs to be participated and processed by two or more communication nodes. The communication node includes a terminal device and/or a network device. For example, the AI task may include a federated learning (federated learning, FL) task, a distributed training task, a distributed learning task, and the like. That the terminal device accesses the AI task may be understood as that the terminal device participates in a computation process of the AI task. In other words, a computation result (including an intermediate computation result and/or a final computation result) of the AI task is obtained by performing processing (for example, arithmetic averaging processing and weighted averaging processing) on a computation result of the terminal device and a computation result of another communication node that may exist, and/or that the terminal device accesses the AI task may further/alternatively be understood as that the terminal device participates in a process of transmitting the computation result of the AI task. In other words, a computation result (including an intermediate computation result and/or a final computation result) of the AI task is transmitted by the terminal device.

Optionally, the identifier of the AI task is a radio network temporary identifier (radio network temporary identifier, RNTI) associated with the AI task, so that the terminal device can determine, based on the RNTI, the AI task corresponding to the first information (or the access information indicated by the first information). For example, the first information mentioned above may be physical downlink control channel (physical downlink control channel, PDCCH) data scrambled by using the radio network temporary identifier (radio network temporary identifier, RNTI).

Optionally, that the identifier of the AI task is the RNTI associated with the AI task may be understood as follows: The identifier of the AI task is an RNTI of the AI task, the identifier of the AI task is an RNTI used to transmit traffic data of the AI task, the identifier of the AI task is an RNTI dedicated to the AI task, the identifier of the AI task is a specific RNTI of the AI task, or the identifier of the AI task is generated based on a task identifier (identifier, ID) of the AI task.

Optionally, the identifier of the AI task is not bound to a specific terminal device and/or a specific transmission channel, so that different terminal devices and/or different transmission channels can use an identifier of a same AI task to receive and/or send traffic data of the same AI task. Compared with an implementation in which different identifiers are configured for the different terminal devices and/or the different transmission channels, configuration can be simplified and signaling overheads can be reduced. In addition, because the identifier does not need to be associated with the specific terminal device (and/or because the identifier does not need to be associated with the specific transmission channel), privacy leakage can be avoided, thereby protecting privacy of the terminal device (or the user).

In a possible implementation of the first aspect, the access information of the AI task includes at least one of the following:

information indicating an access condition of the AI task; information indicating an information update periodicity of the AI task; information indicating a training periodicity of the AI task; information indicating an uplink resource configuration of traffic data of the AI task; information indicating a downlink resource configuration of the traffic data of the AI task; information indicating a codebook of the traffic data of the AI task; information indicating a transmission mode of the traffic data of the AI task; information indicating an uplink transmission parameter of the traffic data of the AI task; and information indicating a downlink transmission parameter of the traffic data of the AI task.

Based on the foregoing technical solution, in the access information that is of the AI task and that is indicated by the first information, the access information of the AI task includes at least one of the foregoing items, so that a receiver of the first information obtains, by using the at least one of the items, various types of access information related to the AI task, thereby improving flexibility of implementing the solution.

In a possible implementation of the first aspect, the information indicating the access condition of the AI task includes at least one of the following:

an identifier range of a terminal device that accesses the AI task; a random number threshold for accessing the AI task; a performance indicator threshold for accessing the AI task; a start moment for accessing the AI task; and an end moment for accessing the AI task.

Based on the foregoing technical solution, in the access information that is of the AI task and that is indicated by the first information, the information indicating the access condition of the AI task may include at least one of the foregoing items, so that the network device can flexibly configure the access condition of the AI task, thereby improving flexibility of implementing the solution.

In a possible implementation of the first aspect, the transmission mode of the traffic data of the AI task includes any one of the following:

a first transmission mode, where the first transmission mode indicates to perform at least one of quantization processing, modulation and coding processing, and processing using the identifier of the AI task on the traffic data of the AI task, and transmission resources of at least two terminal devices in the first transmission mode are orthogonal;
a second transmission mode, where the second transmission mode indicates to perform at least one of third-order quantization modulation processing, pre-equalization superposition transmission processing, and common codebook-based modulation and coding processing on the traffic data of the AI task; and
a third transmission mode, where the third transmission mode indicates to perform at least one of quantization processing, modulation and coding processing, and processing using the identifier of the AI task on the traffic data of the AI task, and transmission resources of at least two terminal devices in the third transmission mode are the same.

Based on the foregoing technical solution, in the access information that is of the AI task and that is indicated by the first information, the indicated transmission mode of the traffic data of the AI task includes at least one of the foregoing items, so that the network device can flexibly configure the transmission mode of the traffic data of the AI task, thereby improving flexibility of implementing the solution.

In a possible implementation of the first aspect, the uplink transmission configuration parameter and/or the downlink transmission configuration parameter include/includes at least one of the following: a modulation and coding scheme (modulation and coding scheme, MCS), a hybrid automatic repeat request (hybrid automatic repeat request, HARQ) version, power control and a quantization modulation order, and a transmit power threshold.

Based on the foregoing technical solution, in the access information that is of the AI task and that is indicated by the first information, an indicated transmission configuration parameter includes at least one of the foregoing items, so that the network device can flexibly configure the transmission configuration parameter of the AI task, thereby improving flexibility of implementing the solution.

In a possible implementation of the first aspect, after that the terminal device determines the access information of the AI task based on the identifier of the AI task and the first information, the method further includes: The terminal device sends, based on the access information of the AI task, local traffic data corresponding to the AI task; and the terminal device receives fused traffic data corresponding to the AI task.

Based on the foregoing technical solution, after the terminal device determines the access information of the AI task based on the identifier of the AI task, the terminal device may receive and send, based on the access information of the AI task, traffic data related to the AI task, so that the terminal device can access (or participate in) the AI task.

In a possible implementation of the first aspect, the method further includes: The terminal device sends indication information indicating that receiving of the fused traffic data is acknowledged.

Based on the foregoing technical solution, after the terminal device receives the fused traffic data corresponding to the AI task, the terminal device may further send the indication information indicating that receiving of the fused traffic data is acknowledged, so that the network device can determine, based on the indication information, whether the terminal device successfully receives the fused traffic data. This helps the network device subsequently schedule, based on the indication information, one or more terminal devices participating in the AI task.

In a possible implementation of the first aspect, before that the terminal device sends, based on the access information, the local traffic data corresponding to the AI task, the method further includes: The terminal device sends indication information indicating that local training of the AI task is already completed; and the terminal device receives indication information indicating to send the local traffic data.

Based on the foregoing technical solution, the indication information indicating that the local training of the AI task is already completed and the indication information indicating to send the local traffic data are exchanged, so that the network device can determine an execution status of local training of the terminal device, and schedule the terminal device based on the execution status.

In addition, in the foregoing exchanging process, when the network device determines that a quantity of terminal devices of which local training is already completed is greater than or equal to a threshold, the network device may schedule the terminal device to send the local traffic data, to ensure that a quantity of terminal devices that access the AI task satisfies a requirement of the threshold.

In a possible implementation of the first aspect, before that the terminal device receives the first information, the method further includes: The terminal device receives indication information indicating to report capability information that participates in the AI task; and the terminal device sends second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size.

Based on the foregoing technical solution, after the terminal device receives the indication information indicating to report the capability information that participates in the AI task, the terminal device may further send the second information indicating the communication capability information and/or the AI capability information, so that the network device can determine, based on the second information, capability information that is of the terminal device and that participates in the AI task, and determine the access information of the AI task based on capability information of one or more terminal devices, to perform scheduling by using the first information indicating the access information of the AI task.

In a possible implementation of the first aspect, before that the terminal device receives the first information, the method further includes: The terminal device receives third information, where the third information indicates publishing information of the AI task, and the third information is obtained by processing the publishing information by using the identifier of the AI task; and the terminal device sends fourth information, where the fourth information indicates to register with the AI task, and the fourth information includes at least one of the following: AI capability information of the terminal device and an identifier of the terminal device.

Based on the foregoing technical solution, the terminal device may further receive the third information indicating the publishing information of the AI task, and the third information is obtained by processing the publishing information by using the identifier of the AI task, so that after obtaining the publishing information based on the identifier of the AI task, the terminal device can send, to the network device, the fourth information indicating to register with the AI task, thereby implementing a publishing process and a registration process of the AI task by exchanging the third information and the fourth information.

In a possible implementation of the first aspect, the publishing information includes at least one of the following: the identifier of the AI task, a common codebook for reporting user information, and indication information of a transmission resource.

Based on the foregoing technical solution, the publishing information received by the terminal device may include at least one of the foregoing items, so that the terminal device can obtain related information of the AI task based on the at least one of the foregoing items, and send the fourth information based on the information, to implement the registration process of the AI task.

In a possible implementation of the first aspect, the method further includes: The terminal device receives indication information indicating that receiving of the fourth information is acknowledged.

Based on the foregoing technical solution, the terminal device may further receive the indication information indicating that receiving of the fourth information is acknowledged, so that the terminal device determines, based on the indication information, whether the network device successfully receives the fourth information, and further the terminal device determines whether the terminal device successfully registers with the AI task.

A second aspect of this application provides a communication method. The method is performed by a network device, or the method is performed by some components (for example, a processor, a chip, or a chip system) in the network device, or the method may be implemented by a logic module or software that can implement all or some functions of the network device. In the second aspect and possible implementations of the second aspect, an example in which the method is performed by the network device is used for description. In the method, the network device determines first information, where the first information indicates access information of an artificial intelligence AI task, and the first information is obtained by processing the access information of the AI task by using an identifier of the AI task; and the network device sends the first information.

Based on the foregoing technical solution, after the network device sends the first information that indicates the access information of the AI task, the terminal device may determine the access information of the AI task based on the identifier of the AI task, where the first information is obtained by processing the access information of the AI task by using the identifier of the AI task. In other words, when the network device indicates the access information of the AI task by using the first information, the terminal device may obtain the access information of the AI task from the first information by using the identifier of the AI task, so that the terminal device can subsequently access the AI task based on the access information of the AI task, and further a computing capability of the terminal device can be used for the AI task, to implement execution of the AI task in a communication network.

In addition, the first information sent by the network device is processed by using the identifier of the AI task. After the terminal device receives the first information, the terminal device can obtain the access information of the AI task by using the identifier of the AI task. Therefore, when a quantity of terminal devices is greater than one, different terminal devices all can obtain the access information of the AI task by using the identifier of the AI task, thereby reducing implementation complexity and improving efficiency.

Optionally, that the first information is obtained by processing the access information of the AI task by using the identifier of the AI task includes: The first information is obtained by processing the access information of the AI task by using the identifier of the AI task and not by using an identifier of the terminal device, or the first information is obtained by processing the access information of the AI task by using the identifier of the AI task and by using the identifier of the terminal device. In comparison, in the former solution, because the identifier of the terminal device does not need to participate in processing of the access information, the access information can be processed by using the identifier of the AI task. In this way, different terminal devices (or users) all can obtain the access information of the AI task by using the identifier of the AI task, thereby protecting privacy of the terminal device (or the user).

It should be understood that the first information may be obtained by processing the access information of the AI task in a plurality of manners by using the identifier of the AI task. For example, the processing may include at least one of scrambling processing, encryption processing, and encapsulation processing (or referred to as data packaging processing). In other words, the terminal device may determine the access information of the AI task in a plurality of manners, for example, at least one of descrambling processing, decryption processing, and decapsulation processing (or referred to as data unpackaging processing), based on the identifier of the AI task and the first information.

In an implementation example, the processing may be scrambling processing. Correspondingly, after the terminal device receives the first information, the terminal device may perform descrambling processing on the first information based on the identifier of the AI task, to obtain the access information of the AI task. In other words, the network device may scramble different information (where the different information may include the first information) by using different identifiers. After the terminal device receives the different information, in a process in which the terminal device descrambles the different information based on the different identifiers, the terminal device descrambles the first information based on the identifier of the AI task, to obtain the access information of the AI task.

In another implementation example, the processing may be encryption processing. Correspondingly, after the terminal device receives the first information, the terminal device may perform decryption processing on the first information based on the identifier of the AI task, to obtain the access information of the AI task. In other words, the network device may encrypt different information (where the different information may include the first information) by using different identifiers. After the terminal device receives the different information, in a process in which the terminal device decrypts the different information based on the different identifiers, the terminal device decrypts the first information based on the identifier of the AI task, to obtain the access information of the AI task.

In another implementation example, the processing may be encapsulation processing (or referred to as data packaging processing). Correspondingly, after the terminal device receives the first information, the terminal device may perform decapsulation processing (or referred to as data unpackaging processing) on the first information, to obtain data carried in the first information, and then the terminal device determines, in the data obtained after the decapsulation, the access information of the AI task based on the identifier of the AI task. In other words, the network device may encapsulate different information (where the different information may include the first information) by using different identifiers. After receiving the different information, the terminal device decapsulates the different information, to obtain data after the decapsulation, and the terminal device determines, in the data after the decapsulation, the access information of the AI task based on the identifier of the AI task.

It should be understood that the access information of the AI task may be understood as information used to access the AI task. To be specific, after the terminal device determines the access information of the AI task, the terminal device may access the AI task based on the access information of the AI task.

It should be understood that the AI task in this application may be a task that needs to be participated and processed by two or more communication nodes. The communication node includes a terminal device and/or a network device. For example, the AI task may include a federated learning (federated learning, FL) task, a distributed training task, a distributed learning task, and the like. That the terminal device accesses the AI task may be understood as that the terminal device participates in a computation process of the AI task. In other words, a computation result (including an intermediate computation result and/or a final computation result) of the AI task is obtained by performing processing (for example, arithmetic averaging processing and weighted averaging processing) on a computation result of the terminal device and a computation result of another communication node that may exist, and/or that the terminal device accesses the AI task may further/alternatively be understood as that the terminal device participates in a process of transmitting the computation result of the AI task. In other words, a computation result (including an intermediate computation result and/or a final computation result) of the AI task is transmitted by the terminal device.

Optionally, the identifier of the AI task is a radio network temporary identifier (radio network temporary identifier, RNTI) associated with the AI task, so that the terminal device can determine, based on the RNTI, the AI task corresponding to the first information (or the access information indicated by the first information).

Optionally, that the identifier of the AI task is the RNTI associated with the AI task may be understood as follows: The identifier of the AI task is an RNTI of the AI task, the identifier of the AI task is an RNTI used to transmit traffic data of the AI task, the identifier of the AI task is an RNTI dedicated to the AI task, the identifier of the AI task is a specific RNTI of the AI task, or the identifier of the AI task is generated based on a task identifier (identifier, ID) of the AI task.

Optionally, the identifier of the AI task is not bound to a specific terminal device and/or a specific transmission channel, so that different terminal devices and/or different transmission channels can use an identifier of a same AI task to receive and/or send traffic data of the same AI task. Compared with an implementation in which different identifiers are configured for the different terminal devices and/or the different transmission channels, configuration can be simplified and signaling overheads can be reduced. In addition, because the identifier does not need to be associated with the specific terminal device (and/or because the identifier does not need to be associated with the specific transmission channel), privacy leakage can be avoided, thereby protecting privacy of the terminal device (or the user).

In a possible implementation of the second aspect, the access information of the AI task includes at least one of the following:

information indicating an access condition of the AI task; information indicating an information update periodicity of the AI task; information indicating a training periodicity of the AI task; information indicating an uplink resource configuration of traffic data of the AI task; information indicating a downlink resource configuration of the traffic data of the AI task; information indicating a codebook of the traffic data of the AI task; information indicating a transmission mode of the traffic data of the AI task; information indicating an uplink transmission parameter of the traffic data of the AI task; and information indicating a downlink transmission parameter of the traffic data of the AI task.

Based on the foregoing technical solution, in the access information that is of the AI task and that is indicated by the first information, the access information of the AI task includes at least one of the foregoing items, so that a receiver of the first information obtains, by using the at least one of the items, various types of access information related to the AI task, thereby improving flexibility of implementing the solution.

In a possible implementation of the second aspect, the information indicating the access condition of the AI task includes at least one of the following:

an identifier range of a terminal device that accesses the AI task; a random number threshold for accessing the AI task; a performance indicator threshold for accessing the AI task; a start moment for accessing the AI task; and an end moment for accessing the AI task.

Based on the foregoing technical solution, in the access information that is of the AI task and that is indicated by the first information, the information indicating the access condition of the AI task may include at least one of the foregoing items, so that the network device can flexibly configure the access condition of the AI task, thereby improving flexibility of implementing the solution.

In a possible implementation of the second aspect, the transmission mode of the traffic data of the AI task includes any one of the following:

a first transmission mode, where the first transmission mode indicates to perform at least one of quantization processing, modulation and coding processing, and processing using the identifier of the AI task on the traffic data of the AI task, and transmission resources of at least two terminal devices in the first transmission mode are orthogonal;

a second transmission mode, where the second transmission mode indicates to perform at least one of third-order quantization modulation processing, pre-equalization superposition transmission processing, and common codebook-based modulation and coding processing on the traffic data of the AI task; and

a third transmission mode, where the third transmission mode indicates to perform at least one of quantization processing, modulation and coding processing, and processing using the identifier of the AI task on the traffic data of the AI task, and transmission resources of at least two terminal devices in the third transmission mode are the same.

Based on the foregoing technical solution, in the access information that is of the AI task and that is indicated by the first information, the indicated transmission mode of the traffic data of the AI task includes at least one of the foregoing items, so that the network device can flexibly configure the transmission mode of the traffic data of the AI task, thereby improving flexibility of implementing the solution.

In a possible implementation of the second aspect, the uplink transmission configuration parameter and/or the downlink transmission configuration parameter include/includes at least one of the following: a modulation and coding scheme MCS, a hybrid automatic repeat request HARQ version, power control and a quantization modulation order, and a transmit power threshold.

Based on the foregoing technical solution, in the access information that is of the AI task and that is indicated by the first information, an indicated transmission configuration parameter includes at least one of the foregoing items, so that the network device can flexibly configure the transmission configuration parameter of the AI task, thereby improving flexibility of implementing the solution.

In a possible implementation of the second aspect, after that the network device sends the first information, the method further includes: The network device receives local traffic data corresponding to the AI task; and the network device sends fused traffic data corresponding to the AI task.

Based on the foregoing technical solution, after that the network device sends the first information, so that the terminal device determines the access information of the AI task based on the identifier of the AI task, the terminal device may receive and send, based on the access information of the AI task, traffic data related to the AI task, so that the terminal device can access (or participate in) the AI task.

In a possible implementation of the second aspect, the method further includes: The network device receives indication information indicating that receiving of the fused traffic data is acknowledged.

Based on the foregoing technical solution, after the terminal device receives the fused traffic data corresponding to the AI task, the terminal device may further send the indication information indicating that receiving of the fused traffic data is acknowledged, so that the network device can determine, based on the indication information, whether the terminal device successfully receives the fused traffic data. This helps the network device subsequently schedule, based on the indication information, one or more terminal devices participating in the AI task.

In a possible implementation of the second aspect, before that the network device receives the local traffic data corresponding to the AI task, the method further includes: The network device receives indication information indicating that local training of the AI task is already completed; and the network device sends indication information indicating to send the local traffic data.

Based on the foregoing technical solution, the indication information indicating that the local training of the AI task is already completed and the indication information indicating to send the local traffic data are exchanged, so that the network device can determine an execution status of local training of the terminal device, and schedule the terminal device based on the execution status.

In addition, in the foregoing exchanging process, when the network device determines that a quantity of terminal devices of which local training is already completed is greater than or equal to a threshold, the network device may schedule the terminal device to send the local traffic data, to ensure that a quantity of terminal devices that access the AI task satisfies a requirement of the threshold.

In a possible implementation of the second aspect, before that the network device sends the first information, the method further includes: The network device sends indication information indicating to report capability information that participates in the AI task; and the network device receives second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size.

Based on the foregoing technical solution, after the terminal device receives the indication information indicating to report the capability information that participates in the AI task, the terminal device may further send the second information indicating the communication capability information and/or the AI capability information, so that the network device can determine, based on the second information, capability information that is of the terminal device and that participates in the AI task, and determine the access information of the AI task based on capability information of one or more terminal devices, to perform scheduling by using the first information indicating the access information of the AI task.

In a possible implementation of the second aspect, before that the network device sends the first information, the method further includes: The network device sends third information, where the third information indicates publishing information of an AI task, and the third information is obtained by processing the publishing information by using the identifier of the AI task; and the network device receives fourth information, where the fourth information indicates to register with the AI task, and the fourth information includes at least one of the following: AI capability information of the terminal device and an identifier of the terminal device.

Based on the foregoing technical solution, the terminal device may further receive the third information indicating the publishing information of the AI task, and the third information is obtained by processing the publishing information by using the identifier of the AI task, so that after obtaining the publishing information based on the identifier of the AI task, the terminal device can send, to the network device, the fourth information indicating to register with the AI task, thereby implementing a publishing process and a registration process of the AI task by exchanging the third information and the fourth information.

In a possible implementation of the second aspect, the method further includes: The network device sends indication information indicating that receiving of the fourth information is acknowledged.

Based on the foregoing technical solution, the terminal device may further receive the indication information indicating that receiving of the fourth information is acknowledged, so that the terminal device determines, based on the indication information, whether the network device successfully receives the fourth information, and further the terminal device determines whether the terminal device successfully registers with the AI task.

In a possible implementation of the second aspect, the publishing information includes at least one of the following: the identifier of the AI task, a common codebook for reporting user information, and indication information of a transmission resource.

Based on the foregoing technical solution, the publishing information sent by the network device may include at least one of the foregoing items, so that the terminal device can obtain related information of the AI task based on the at least one of the foregoing items, and send the fourth information based on the information, to implement a registration process of the AI task.

A third aspect of this application provides a communication apparatus. The apparatus is a terminal device, or the apparatus is a part of components (for example, a processor, a chip, or a chip system) in the terminal device, or the apparatus may be a logic module or software that can implement all or some functions of the terminal device. In the third aspect and possible implementations of the third aspect, an example in which the communication apparatus is the terminal device is used for description.

The apparatus includes a processing unit and a transceiver unit. The transceiver unit is configured to receive first information, where the first information indicates access information of an AI task, and the first information is obtained by processing the access information of the AI task by using an identifier of the AI task. The processing unit is configured to determine the access information of the AI task based on the identifier of the AI task and the first information.

In a possible implementation of the third aspect, the access information of the AI task includes at least one of the following:

information indicating an access condition of the AI task; information indicating an information update periodicity of the AI task; information indicating a training periodicity of the AI task; information indicating an uplink resource configuration of traffic data of the AI task; information indicating a downlink resource configuration of the traffic data of the AI task; information indicating a codebook of the traffic data of the AI task; information indicating a transmission mode of the traffic data of the AI task; information indicating an uplink transmission parameter of the traffic data of the AI task; and information indicating a downlink transmission parameter of the traffic data of the AI task.

In a possible implementation of the third aspect, the information indicating the access condition of the AI task includes at least one of the following:

an identifier range of a terminal device that accesses the AI task; a random number threshold for accessing the AI task; a performance indicator threshold for accessing the AI task; a start moment for accessing the AI task; and an end moment for accessing the AI task.

In a possible implementation of the third aspect, the transmission mode of the traffic data of the AI task includes any one of the following:

a first transmission mode, where the first transmission mode indicates to perform at least one of quantization processing, modulation and coding processing, and processing using the identifier of the AI task on the traffic data of the AI task, and transmission resources of at least two terminal devices in the first transmission mode are orthogonal;

a second transmission mode, where the second transmission mode indicates to perform at least one of third-order quantization modulation processing, pre-equalization superposition transmission processing, and common codebook-based modulation and coding processing on the traffic data of the AI task; and

a third transmission mode, where the third transmission mode indicates to perform at least one of quantization processing, modulation and coding processing, and processing using the identifier of the AI task on the traffic data of the AI task, and transmission resources of at least two terminal devices in the third transmission mode are the same.

In a possible implementation of the third aspect, the uplink transmission configuration parameter and/or the downlink transmission configuration parameter include/includes at least one of the following:

a modulation and coding scheme MCS, a hybrid automatic repeat request HARQ version, power control and a quantization modulation order, and a transmit power threshold.

In a possible implementation of the third aspect, the transceiver unit is further configured to send, based on the access information of the AI task, local traffic data corresponding to the AI task; and the transceiver unit is further configured to receive fused traffic data corresponding to the AI task.

In a possible implementation of the third aspect, the transceiver unit is further configured to send indication information indicating that receiving of the fused traffic data is acknowledged.

In a possible implementation of the third aspect, the transceiver unit is further configured to send indication information indicating that local training of the AI task is already completed; and the transceiver unit is further configured to receive indication information indicating to send the local traffic data.

In a possible implementation of the third aspect, the identifier of the AI task is a radio network temporary identifier RNTI associated with the AI task.

In a possible implementation of the third aspect, the transceiver unit is further configured to receive indication information indicating to report capability information that participates in the AI task; and the transceiver unit is further configured to send second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size.

In a possible implementation of the third aspect, the transceiver unit is further configured to receive third information, where the third information indicates publishing information of the AI task, and the third information is obtained by processing the publishing information by using the identifier of the AI task; and the transceiver unit is further configured to send fourth information, where the fourth information indicates to register with the AI task, and the fourth information includes at least one of the following: AI capability information of the terminal device and an identifier of the terminal device.

In a possible implementation of the third aspect, the transceiver unit is further configured to send indication information indicating that receiving of the fourth information is acknowledged.

In a possible implementation of the third aspect, the publishing information includes at least one of the following: the identifier of the AI task, a common codebook for reporting user information, and indication information of a transmission resource.

In the third aspect of this application, a composition module of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus is a network device, or the apparatus is a part of components (for example, a processor, a chip, or a chip system) in the network device, or the apparatus may be a logic module or software that can implement all or some functions of the network device. In the fourth aspect and possible implementations of the fourth aspect, an example in which the communication apparatus is the network device is used for description.

The apparatus includes a processing unit and a transceiver unit. The transceiver unit is configured to determine first information, where the first information indicates access information of an artificial intelligence AI task, and the first information is obtained by processing the access information of the AI task by using an identifier of the AI task. The transceiver unit is configured to send the first information.

In a possible implementation of the fourth aspect, the access information of the AI task includes at least one of the following:
information indicating an access condition of the AI task; information indicating an information update periodicity of the AI task; information indicating a training periodicity of the AI task; information indicating an uplink resource configuration of traffic data of the AI task; information indicating a downlink resource configuration of the traffic data of the AI task; information indicating a codebook of the traffic data of the AI task; information indicating a transmission mode of the traffic data of the AI task; information indicating an uplink transmission parameter of the traffic data of the AI task; and information indicating a downlink transmission parameter of the traffic data of the AI task.

In a possible implementation of the fourth aspect, the information indicating the access condition of the AI task includes at least one of the following:
an identifier range of a terminal device that accesses the AI task; a random number threshold for accessing the AI task; a performance indicator threshold for accessing the AI task; a start moment for accessing the AI task; and an end moment for accessing the AI task.

In a possible implementation of the fourth aspect, the transmission mode of the traffic data of the AI task includes any one of the following:

a first transmission mode, where the first transmission mode indicates to perform at least one of quantization processing, modulation and coding processing, and processing using the identifier of the AI task on the traffic data of the AI task, and transmission resources of at least two terminal devices in the first transmission mode are orthogonal;
a second transmission mode, where the second transmission mode indicates to perform at least one of third-order quantization modulation processing, pre-equalization superposition transmission processing, and common codebook-based modulation and coding processing on the traffic data of the AI task; and

a third transmission mode, where the third transmission mode indicates to perform at least one of quantization processing, modulation and coding processing, and processing using the identifier of the AI task on the traffic data of the AI task, and transmission resources of at least two terminal devices in the third transmission mode are the same.

In a possible implementation of the fourth aspect, the uplink transmission configuration parameter and/or the downlink transmission configuration parameter include/includes at least one of the following: a modulation and coding scheme MCS, a hybrid automatic repeat request HARQ version, power control and a quantization modulation order, and a transmit power threshold.

In a possible implementation of the fourth aspect, the transceiver unit is further configured to receive local traffic data corresponding to the AI task; and the transceiver unit is further configured to send fused traffic data corresponding to the AI task.

In a possible implementation of the fourth aspect, the transceiver unit is further configured to receive indication information indicating that receiving of the fused traffic data is acknowledged.

In a possible implementation of the fourth aspect, the transceiver unit is further configured to receive indication information indicating that local training of the AI task is already completed; and the transceiver unit is further configured to send indication information indicating to send the local traffic data.

In a possible implementation of the fourth aspect, the identifier of the AI task is a radio network temporary identifier RNTI associated with the AI task.

In a possible implementation of the fourth aspect, the transceiver unit is further configured to send indication information indicating to report capability information that participates in the AI task; and the transceiver unit is further configured to receive second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size.

In a possible implementation of the fourth aspect, the transceiver unit is further configured to send third information, where the third information indicates publishing information of the AI task, and the third information is obtained by processing the publishing information by using the identifier of the AI task; and the transceiver unit is further configured to receive fourth information, where the fourth information indicates to register with the AI task, and the fourth information includes at least one of the following: AI capability information of the terminal device and an identifier of the terminal device.

In a possible implementation of the fourth aspect, the publishing information includes at least one of the following: the identifier of the AI task, a common codebook for reporting user information, and indication information of a transmission resource.

In the fourth aspect of this application, a composition module of the communication apparatus may be further configured to: perform the steps performed in the possible implementations of the second aspect, and achieve corresponding technical effects. For details, refer to the second aspect. Details are not described herein again.

A fifth aspect of embodiments of this application provides a communication apparatus, including at least one processor. The at least one processor is coupled to a memory, the memory is configured to store a program or instructions, and the at least one processor is configured to execute the program or the instructions, to enable the apparatus to implement the method according to any one of the first aspect or the possible implementations of the first aspect.

A sixth aspect of embodiments of this application provides a communication apparatus, including at least one processor. The at least one processor is coupled to a memory, the memory is configured to store a program or instructions, and the at least one processor is configured to execute the program or the instructions, to enable the apparatus to implement the method according to any one of the second aspect or the possible implementations of the second aspect.

A seventh aspect of embodiments of this application provides a communication apparatus, including at least one logic circuit and an input/output interface. The logic circuit is configured to perform the method according to any one of the first aspect or the possible implementations of the first aspect.

An eighth aspect of embodiments of this application provides a communication apparatus, including at least one logic circuit and an input/output interface. The logic circuit is configured to perform the method according to any one of the second aspect or the possible implementations of the second aspect.

A ninth aspect of embodiments of this application provides a computer-readable storage medium. The readable storage medium is configured to store one or more computer-executable instructions. When the computer-executable instructions are executed by a processor, the processor performs the method according to any one of the possible implementations of either of the first aspect and the second aspect.

A tenth aspect of embodiments of this application provides a computer program product (or referred to as a computer program). When the computer program product is executed by a processor, the processor performs the method according to any one of the possible implementations of either of the first aspect and the second aspect.

An eleventh aspect of embodiments of this application provides a chip system. The chip system includes at least one processor, configured to support a communication apparatus in implementing a function in any one of the possible implementations of either of the first aspect and the second aspect.

In a possible design, the chip system may further include a memory. The memory is configured to store program instructions and data that are necessary for the first communication apparatus. The chip system may include a chip, or may include a chip and another discrete device. Optionally, the chip system further includes an interface circuit, and the interface circuit provides program instructions and/or data for the at least one processor.

A twelfth aspect of embodiments of this application provides a communication system. The communication system includes the communication apparatus in the third aspect and the communication apparatus in the fourth aspect, and/or the communication system includes the communication apparatus in the fifth aspect and the communication apparatus in the sixth aspect, and/or the communication system includes the communication apparatus in the seventh aspect and the communication apparatus in the eighth aspect.

For technical effects brought by any design manner in the third aspect to the twelfth aspect, refer to technical effects brought by different design manners in the first aspect and the second aspect. Details are not described herein again.

## BRIEF DESCRIPTION OF DRAWINGS

FIG. 1a is a diagram of a communication system according to this application;
FIG. 1b is another diagram of a communication system according to this application;
FIG. 2a is a diagram of an AI processing process according to this application;
FIG. 2b is a diagram of AI data transmission according to this application;
FIG. 3 is a diagram of interaction in a communication method according to this application;
FIG. 4 is a diagram of an application example of a communication method according to this application;
FIG. 5 is another diagram of an application example of a communication method according to this application;
FIG. 6a is another diagram of an application example of a communication method according to this application;
FIG. 6b is another diagram of an application example of a communication method according to this application;

FIG. 7 is another diagram of an application example of a communication method according to this application;
FIG. 8 is a diagram of a communication apparatus according to this application;
FIG. 9 is another diagram of a communication apparatus according to this application;
FIG. 10 is another diagram of a communication apparatus according to this application; and
FIG. 11 is another diagram of a communication apparatus according to this application.

## DESCRIPTION OF EMBODIMENTS

First, some terms in embodiments of this application are described for ease of understanding by a person skilled in the art.

(1) Terminal device: The terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the Internet through a RAN. The terminal device may be a mobile terminal device such as a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus that exchanges voice and/or data with the radio access network. For example, the wireless terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an AI service provided by the network device. Optionally, the terminal device may further have an AI processing capability.

(2) Network device: The network device may be a device in a wireless network. For example, the network device may be a RAN node (or device) connecting a terminal device to the wireless network, and may also be referred to as a base station. Currently, some examples of RAN devices are: a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB or a home NodeB, HNB), a baseband unit (baseband unit, BBU), or a wireless fidelity (wireless fidelity, Wi-Fi) access point AP. In addition, in a network structure, the network device may include a central unit (central unit, CU) node, a distributed unit (distributed unit, DU) node, or a RAN device including a CU node and a DU node.

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next-generation network of the 5G network.

In embodiments of this application, the network device may alternatively be a network node having an AI capability, and may provide an AI service for a terminal or another network device, for example, may be an AI node, a computing power node, a RAN node having an AI capability, or a core network element having an AI capability on a network side (an access network or a core network).

In embodiments of this application, an apparatus configured to implement a function of the network device may be the network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used during transmission. Similar to the configuration, the pre configuration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "A plurality of" refers to two or more than two. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as coding and modulation, may be performed on the information between the source end at which the information is sent and the destination end, but the destination end may understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of various pieces of information that are pre-agreed on (for example, predefined in a protocol), to reduce indication overheads to some extent. A specific indication manner is not limited in this application. It may be understood that, for a sender of the indication information, the indication information may indicate the to-be-indicated information, and for a receiver of the indication information, the indication information may be used for determining the to-be-indicated information.

In this application, for same or similar parts of embodiments, mutual reference may be made between embodiments, unless otherwise specified. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

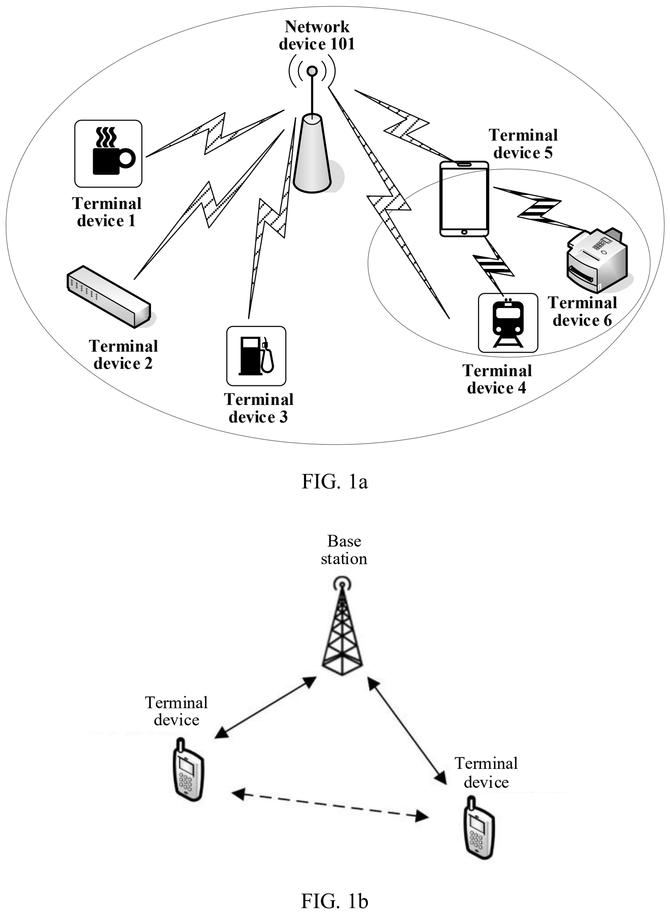

FIG. 1a is a diagram of a communication system according to this application. FIG. 1a shows an example of one network device 101 and six terminal devices. The six terminal devices are a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI information sending entity may be the network device. AI information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send AI information to the terminal device 1 to the terminal device 6.

Optionally, the AI information may include access information of an AI task, fused traffic data, and the like that are mentioned below. The data may include local traffic data and the like that are mentioned below.

For example, in FIG. 1a, the terminal device 4 to the terminal device 6 may also form a communication system. The terminal device 5 serves as a network device, that is, an AI information sending entity. The terminal device 4 and the terminal device 6 serve as terminal devices, that is, AI information receiving entities. For example, in an internet of vehicles system, the terminal device 5 separately sends AI information to the terminal device 4 and the terminal device 6, and receives data sent by the terminal device 4 and the terminal device 6; and correspondingly, the terminal device 4 and the terminal device 6 receive the AI information sent by the terminal device 5, and send the data to the terminal device 5.

The communication system shown in FIG. 1a is used as an example. In addition to a communication-related service, an AI-related service may be performed between different devices (including between network devices, between a network device and a terminal device, and/or between terminal devices). For example, as shown in FIG. 1b, an example in which a network device is a base station is used. A communication-related service and an AI-related service may be performed between the base station and one or more terminal devices, and the communication-related service and the AI-related service may also be performed between different terminal devices.

The technical solutions provided in this application may be applied to a wireless communication system (for example, the system shown in FIG. 1a or FIG. 1b). In the wireless communication system, a communication node usually has a signal receiving and sending capability and a computing capability. A network device having a computing capability is used as an example.

The computing capability of the network device is mainly to provide computing power support for a signal receiving and sending capability (for example, perform computation on a time domain resource, a frequency domain resource, and the like for carrying a signal), to implement a communication task between the network device and another communication node.

However, in a communication network, in addition to providing computing power support for the foregoing communication task, the computing capability of the communication node may further have a surplus computing capability. Therefore, how to use these computing capabilities is an urgent technical problem to be resolved.

In a possible implementation, the computing capability of the communication node may be used for a distributed learning task that is an AI task. The distributed learning may be a manner in which a plurality of devices obtain a local model through training by using local data, and then combine a plurality of local models to obtain a global model, to implement joint learning on a premise of protecting data privacy of a user by transmitting the model instead of transmitting original data of the user. In the distributed learning, a model weight parameter or gradient locally obtained needs to be transmitted between the plurality of devices, and the global model is updated after convergence.

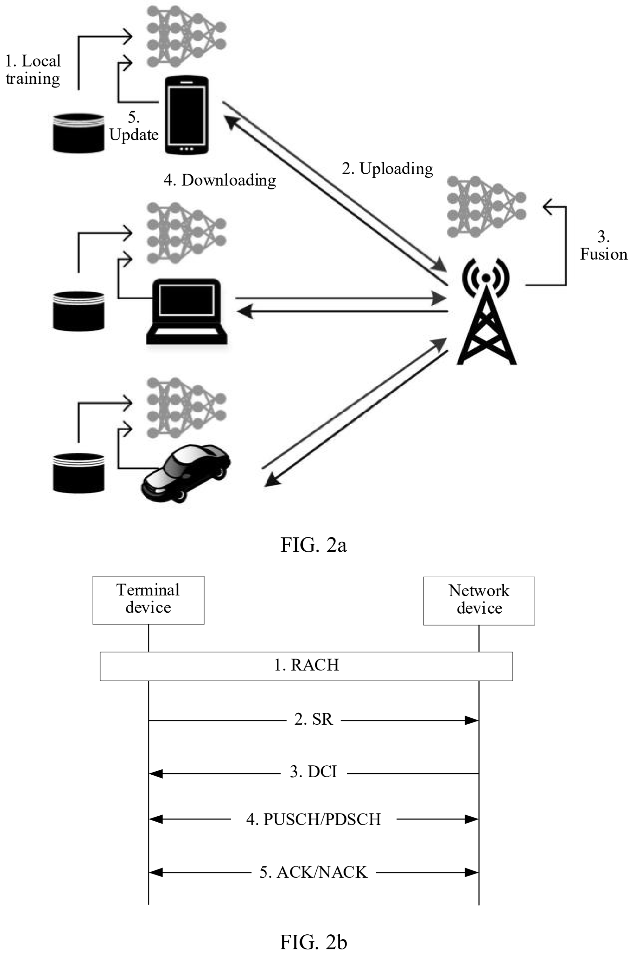

For example, federated learning is used as an example. A system includes a model parameter server and a client. If the system is used in a communication network, a network device may be the server and a terminal device may be the client. In each round of training, the client updates a local model based on a global model weight parameter or gradient delivered by the server; and then obtains a new local model weight parameter or gradient through training based on local data, and uploads the new local model weight parameter or gradient to the server; the server obtains a global model weight parameter or gradient of a current round by averaging received model weight parameters or gradients of a plurality of clients, and delivers the global model weight parameter or gradient to the clients; and each client obtains a global model of a new round through update. Averaging the model weight parameters or gradients is a common manner to implement model fusion in the distributed learning. As shown in FIG. 2a, that terminal devices participating in federated learning include K (where K is greater than 1) terminal devices is used as an example. A procedure of one round of the federated learning is as follows:

Step 1: Local training: A $k^{th}$ terminal device (namely, a terminal device k) in the K terminal devices performs gradient descent-based training based on local data and a global model $w_t^k$ of a $t^{th}$ round, to obtain a weight parameter $w_{t+1/2}^k$ or an updated value (or referred to as a gradient)

$$\Delta w_t^k = w_{t+1/2}^k - w_t^k.$$

Step 2: Model upload: The terminal device uploads the gradient $\Delta w_t^k$ (or the weight parameter $w_{t+1/2}^k$, k = 1,2, ..., K).

Step 3: Model fusion: The server obtains a global gradient $\overline{\Delta w_t} = 1/K \sum_{k=1}^{K} \Delta w_t^k$ (or weight $w_{t+1} = 1/K \sum_{k=1}^{K} w_{t+1/2}^k$) by averaging gradients or weights.

Step 4: Model delivery: The server sends the global gradient $\overline{\Delta w_t}$ (or weight $w_{t+1}$) to the terminal device.

Step 5: Model update: The terminal device updates a local model to a global model $w_{t+1} = w_t + \eta * \overline{\Delta w_t}$ (or $w_{t+1/2}^k \to w_{t+1}$) based on the global model or weight.

In addition, step 3 in FIG. 2a in the above may be implemented through over-the-air computation. The over-the-air computation is a manner of implementing specific computation by using a feature of adding radio signals in the air. For model averaging in the distributed learning, over-the-air computation may support simultaneous transmission of a plurality of client model parameters or gradients through radio signal superposition, and signals at a receiving end implement averaging of the model parameters or gradients, thereby reducing occupation of communication resources. For signals simultaneously sent by the terminal devices, a signal y received by the receiving end is shown in the following formula:

$$y = \sum_{k=1}^{K} h_k * \text{mod}(\Delta w^k) + n, h_k \in \mathbb{C}.$$

$\Delta w^k$ represents a model parameter or gradient of the $k^{th}$ terminal device, $\text{mod}(\cdot)$ represents that the model parameter or gradient is modulated into a symbol, $h_k$ represents a complex number channel from the $k^{th}$ terminal device to the network device, and n represents noise.

In addition, a process of uplink and downlink data transmission between the terminal device and the network device in step 2 and step 4 in FIG. 2a may be implemented by using a process shown in FIG. 2b, and includes the following steps.

Step 1: A terminal device accesses a network device by using a random access (random access channel, RACH) procedure.

Step 2: The terminal device sends a scheduling request (scheduling request, SR).

Step 3: The network device sends downlink control information (downlink control information, DCI).

Step 4: The network device and the terminal device respectively transmit uplink data and downlink data on a physical uplink shared channel (physical uplink shared channel, PUSCH) and a physical downlink shared channel (physical downlink shared channel, PDSCH).

Step 5: The network device and the terminal device may feed back, by using a hybrid automatic repeat request acknowledgement (hybrid automatic repeat request acknowledgement, HARQ ACK, ACK for short) or a hybrid automatic repeat request negative acknowledgement (hybrid automatic repeat request negative acknowledgement, HARQ NACK, NACK for short), whether the data of the PUSCH/PUSCH is successfully received.

It can be learned from FIG. 2b that when the terminal device needs to send the uplink data, the terminal device first obtains a granted uplink transmission resource by using the RACH process, and sends an uplink transmission resource request by using the SR, and the network device indicates, by using DCI scrambled by using a specific RNTI, to perform uplink or downlink transmission, where transmitted data is scrambled by using a corresponding RNTI.

Generally, a DCI format includes a format 0_x for PUSCH transmission of a specific terminal device; a format 1_x for PDSCH transmission of the specific terminal device; a format 2_x used for control indication of a group of terminal devices, including a slot format indication, power control, a wake-up signal, and the like; a format 3_x used for sidelink transmission; and a format 4_x used for multicast/broadcast. The RNTI includes a global RNTI used for system information, such as paging, broadcast, and a random access procedure; a terminal device-specific RNTI used for unicast transmission, including dynamic or semi-static transmission; a group RNTI used for multicast/broadcast transmission; and a global RNTI used for a control indication.

However, in a process in which a plurality of terminal devices participate in training in the foregoing federated learning, in step 2 shown in FIG. 2a, the terminal device needs to upload a model to the network device for fusion, and the network device may not need to decode data of a single terminal device (for example, the foregoing implementation process of over-the-air computation), and further different terminal devices may not need to be distinguished. However, in the access method shown in FIG. 2b, the network device needs to perform dedicated access configuration (for example, an interaction process of step 2 and step 3 shown in FIG. 2b) on each terminal device that has data transmission. This cannot efficiently support a scenario in which the plurality of terminal devices simultaneously upload a model parameter in the federated learning, and the dedicated configuration may further cause privacy leakage of the terminal device.

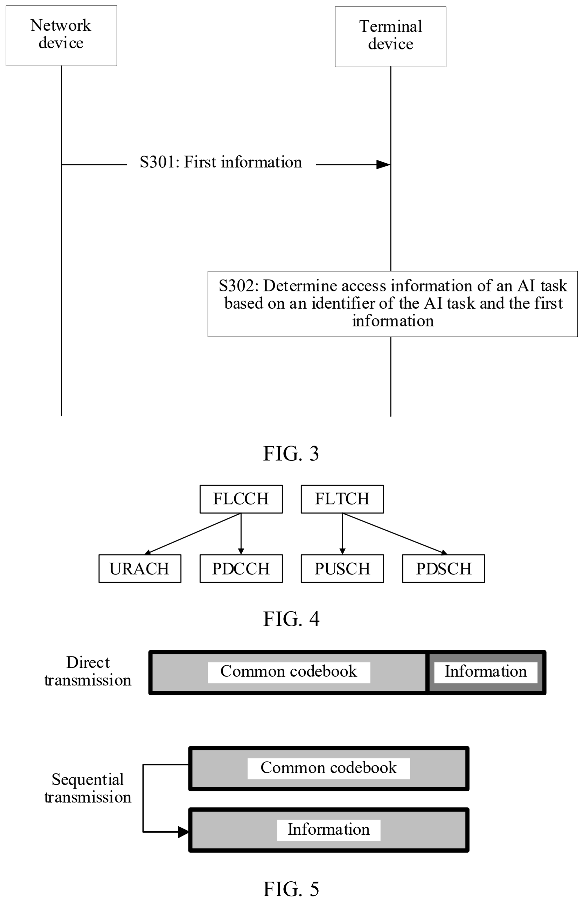

To resolve the foregoing problem, this application provides a communication method and a related device. The following provides detailed descriptions with reference to the accompanying drawings. FIG. 3 is a diagram of an implementation of a communication method according to this application. The method includes the following steps.

It should be noted that in FIG. 3, the method is illustrated by using an example in which a terminal device and a network device are used as execution bodies of interaction illustration. However, the execution bodies of the interaction illustration are not limited in this application. For example, in FIG. 3 and a corresponding implementation, an execution body of S301 is the network device, or the execution body may be a chip, a chip system, or a processor that supports the network device in implementing the method, or may be a logic module or software that can implement all or some functions of the network device. In FIG. 3 and the corresponding embodiment, the terminal device in S301 and S302 may alternatively be replaced with a chip, a chip system, or a processor that supports the terminal device in implementing the method, or may be replaced with a logic module or software that can implement all or some functions of the terminal device.

S301: The network device sends first information, and correspondingly, the terminal device receives the first information. The first information is obtained by processing access information of an AI task by using an identifier of the AI task.

S302: The terminal device determines the access information of the AI task based on the identifier of the AI task and the first information.

It should be understood that the first information sent by the network device in step S301 may be obtained by processing the access information of the AI task in a plurality of manners by using the identifier of the AI task. For example, the processing may include at least one of scrambling processing, encryption processing, and encapsulation processing (or referred to as data packaging processing). In other words, after the terminal device receives the first information in step S301, in step S302, the terminal device may determine the access information of the AI task in a plurality of manners, for example, at least one of descrambling processing, decryption processing, and decapsulation processing (or referred to as data unpackaging processing), based on the identifier of the AI task and the first information.

In an implementation example, the processing may be scrambling processing. Correspondingly, after the terminal device receives the first information, the terminal device may perform descrambling processing on the first information based on the identifier of the AI task, to obtain the access information of the AI task. In other words, the network device may scramble different information (where the different information may include the first information) by using different identifiers. After the terminal device receives the different information, in a process in which the terminal device descrambles the different information based on the different identifiers, the terminal device descrambles the first information based on the identifier of the AI task, to obtain the access information of the AI task.

In another implementation example, the processing may be encryption processing. Correspondingly, after the terminal device receives the first information, the terminal device may perform decryption processing on the first information based on the identifier of the AI task, to obtain the access information of the AI task. In other words, the network device may encrypt different information (where the different information may include the first information) by using different identifiers. After the terminal device receives the different information, in a process in which the terminal device decrypts the different information based on the different identifiers, the terminal device decrypts the first information based on the identifier of the AI task, to obtain the access information of the AI task.

In another implementation example, the processing may be encapsulation processing (or referred to as data packaging processing). Correspondingly, after the terminal device receives the first information, the terminal device may perform decapsulation processing (or referred to as data unpackaging processing) on the first information, to obtain data carried in the first information, and then the terminal device determines, in the data obtained after the decapsulation, the access information of the AI task based on the identifier of the AI task. In other words, the network device may encapsulate different information (where the different information may include the first information) by using different identifiers. After receiving the different information, the terminal device decapsulates the different information, to obtain data after the decapsulation, and the terminal device determines, in the data after the decapsulation, the access information of the AI task based on the identifier of the AI task.

It should be understood that the access information that is of the AI task and that is indicated by the first information may be understood as information used to access the AI task. To be specific, after the terminal device determines the access information of the AI task in step S302, the terminal device may access the AI task based on the access information of the AI task.

It should be understood that the AI task in this application may be a task that needs to be participated and processed by two or more communication nodes. The communication node includes a terminal device and/or a network device. For example, the AI task may include a federated learning (federated learning, FL) task, a distributed training task, a distributed learning task, and the like. That the terminal device accesses the AI task may be understood as that the terminal device participates in a computation process of the AI task. In other words, a computation result (including an intermediate computation result and/or a final computation result) of the AI task is obtained by performing processing (for example, arithmetic averaging processing and weighted averaging processing) on a computation result of the terminal device and a computation result of another communication node that may exist, and/or that the terminal device accesses the AI task may further/alternatively be understood as that the terminal device participates in a process of transmitting the computation result of the AI task. In other words, a computation result (including an intermediate computation result and/or a final computation result) of the AI task is transmitted by the terminal device.

Optionally, the identifier of the AI task is a radio network temporary identifier (radio network temporary identifier, RNTI) associated with the AI task, so that the terminal device can determine, based on the RNTI, the AI task corresponding to the first information (or the access information indicated by the first information). In other words, after the network device scrambles the access information of the AI task based on the RNTI of the AI task to obtain the first information, the network device sends the first information in step S301. Then, in step S302, the terminal device can descramble the first information based on the RNTI of the AI task, to determine the access information of the AI task.

It should be noted that, for the terminal device, the terminal device may obtain the identifier of the AI task in a plurality of manners. For example, an identifier of one or more AI tasks is preconfigured on the terminal device in a protocol/standard preconfiguration manner. For another example, in a configuration manner, the terminal device is enabled to determine the identifier of the AI task by using a message/information sent by the network device, where the message/information may be an RRC message, a MAC CE, DCI, third information mentioned below, or the like.

Optionally, that the identifier of the AI task is the RNTI associated with the AI task may be understood as follows: The identifier of the AI task is an RNTI of the AI task, the identifier of the AI task is an RNTI used to transmit traffic data of the AI task, the identifier of the AI task is an RNTI dedicated to the AI task, the identifier of the AI task is a specific RNTI of the AI task, or the identifier of the AI task is generated based on a task identifier (identifier, ID) of the AI task.

Optionally, when the AI task is a federated learning task, the RNTI of the AI task may be a federated learning radio network temporary identifier (federated learning radio network temporary identifier, FL-RNTI).

Optionally, the identifier of the AI task is not bound to a specific terminal device and/or a specific transmission channel, so that different terminal devices and/or different transmission channels can use an identifier of a same AI task to receive and/or send traffic data of the same AI task. Compared with an implementation in which different identifiers are configured for the different terminal devices and/or the different transmission channels, configuration can be simplified and signaling overheads can be reduced. In addition, because the identifier does not need to be associated with the specific terminal device (and/or because the identifier does not need to be associated with the specific transmission channel), privacy leakage can be avoided, thereby protecting privacy of the terminal device (or the user).

Optionally, that the first information is obtained by processing the access information of the AI task by using the identifier of the AI task includes: The first information is obtained by processing the access information of the AI task by using the identifier of the AI task and not by using an identifier of the terminal device, or the first information is obtained by processing the access information of the AI task by using the identifier of the AI task and by using the identifier of the terminal device. In comparison, in the former solution, because the identifier of the terminal device does not need to participate in processing of the access information, the access information can be processed by using the identifier of the AI task. In this way, different terminal devices (or users) all can obtain the access information of the AI task by using the identifier of the AI task, thereby protecting privacy of the terminal device (or the user).

It should be noted that the identifier of the terminal device may include a cell radio network temporary identifier (cell radio network temporary identifier, C-RNTI), a universal terrestrial radio access network radio network temporary identifier (universal terrestrial radio access network radio network temporary identifier, U-RNTI), a random access radio network temporary identifier (random access radio network temporary identifier, RA-RNTI), an international mobile subscriber identity (international mobile subscriber identity, IMSI), or the like. This is not limited herein.

In a possible implementation, the access information that is of the AI task and that is indicated by the first information sent by the network device in step S301 includes at least one of the following:

information A: information indicating an access condition of the AI task;
information B: information indicating an information update periodicity of the AI task;
information C: information indicating a training periodicity of the AI task;
information D: information indicating an uplink resource configuration of traffic data of the AI task;
information E: information indicating a downlink resource configuration of the traffic data of the AI task;
information F: information indicating a codebook of the traffic data of the AI task;
information G: information indicating a transmission mode of the traffic data of the AI task;
information H: information indicating an uplink transmission parameter of the traffic data of the AI task; and
information I: information indicating a downlink transmission parameter of the traffic data of the AI task.

Specifically, in the access information that is of the AI task and that is indicated by the first information, the access information of the AI task includes at least one of the foregoing items, so that a receiver of the first information obtains, by using the at least one of the items, various types of access information related to the AI task, thereby improving flexibility of implementing the solution.

In a possible implementation, in the access information of the AI task, the access condition indicated by the information A (that is, the information indicating the access condition of the AI task) includes at least one of the following:

condition 1: an identifier range of a terminal device that accesses the AI task;
condition 2: a random number threshold for accessing the AI task;
condition 3: a performance indicator threshold for accessing the AI task;
condition 4: a start moment for accessing the AI task; and
condition 5: an end moment for accessing the AI task.

For example, the condition 1 may be understood as that the condition 1 is satisfied when the identifier range is satisfied, in other words, the identifier range indicates that a terminal device in a specific identifier (identifier, ID) range satisfies the condition 1. For example, the identifier range may include a lower limit of the ID, so that when a user identifier of the terminal device is greater than or equal to the lower limit, it can be determined that the terminal device satisfies the access condition of the AI task. For another example, the identifier range may include an upper limit of the ID, so that when the user identifier of the terminal device is less than or equal to the lower limit, it can be determined that the terminal device satisfies the access condition of the AI task. For another example, the identifier range may include a value of a modulo Q, so that when a result of a value of a modulo Q of the user identifier of the terminal device is 0, it can be determined that the terminal device satisfies the access condition of the AI task.

For example, the condition 2 may be understood as that the condition 2 is satisfied when the random number threshold is satisfied, in other words, when the terminal device locally generates a random number, and the random number generated by the terminal device is greater than or less than the random number threshold, the condition 2 is satisfied.

For example, the condition 3 may be understood as that the condition 3 is satisfied when the performance indicator threshold is satisfied, in other words, when local performance of the terminal device is greater than or equal to the performance indicator threshold, it may be determined that the terminal device satisfies the condition 3. For example, the performance may include one or more of an indicator of an AI training result (for example, a gradient variance or a distance between a local model and a global model) and an indicator of AI processing performance (for example, model performance, AI computing power performance, or an AI splitting and learning capability).

For example, the condition 4 may be understood as that the condition 4 is satisfied when robust computing power is available to execute the AI task starting from the start moment. In other words, the terminal device may need to locally execute computing power of a local application at the start moment. If the terminal device further has surplus computing power at the start moment, it may be determined that the terminal device satisfies the condition 4.

For example, the condition 5 may be understood as that the condition 5 is satisfied when robust computing power is available to execute the AI task before the end moment. In other words, the terminal device may need to locally execute computing power of a local application before the end moment. If the terminal device further has surplus computing power before the end moment, it may be determined that the terminal device satisfies the condition 5.

Therefore, in the access information that is of the AI task and that is indicated by the first information, the information indicating the access condition of the AI task may include at least one of the foregoing items, so that the network device can flexibly configure the access condition of the AI task, thereby improving flexibility of implementing the solution.

In a possible implementation, in the access information of the AI task, the information update periodicity indicated by the information described above may be understood as an update periodicity of the uplink and downlink transmission parameters of the traffic data of the AI task.

In a possible implementation, in the access information of the AI task, the training periodicity indicated by the information C described above may be understood as a training periodicity of the AI task used when the AI task is multi-node joint training (for example, federated training/federated learning).

In a possible implementation, in the access information of the AI task, the uplink resource configuration indicated by the information D and/or the downlink resource configuration indicated by the information E described above may be understood as a resource used to be configured to carry uplink data and/or downlink data related to the AI task, for example, one or more of a time domain resource, a frequency domain resource, and a code domain resource.

In a possible implementation, in the access information of the AI task, the codebook indicated by the information F described above is used to transmit the uplink data and/or the downlink data related to the AI task. That the codebook is used to transmit the uplink data related to the AI task is used as an example. The codebook indicated by the information F may be a codebook used to transmit the uplink data. The codebook includes a group of codewords. After being processed (for example, quantized), local traffic data is mapped to a corresponding codeword according to a preset mapping rule. For example, a data quantization range is 0 to 255, and corresponds to 256 codewords. When data is specifically quantized to 17, a codeword 17 is selected for sending.

In a possible implementation, in the access information of the AI task, the transmission mode that is of the traffic data of the AI task and that is indicated by the information G includes any one of the following:

> a first transmission mode (which may be referred to as a conventional transmission mode), where the first transmission mode indicates to perform at least one of quantization processing, modulation and coding processing, and processing using the identifier of the AI task on the traffic data of the AI task, and transmission resources of at least two terminal devices in the first transmission mode are orthogonal;
> a second transmission mode (which may be referred to as an analog transmission mode), where the second transmission mode indicates to perform at least one of third-order quantization modulation processing, pre-equalization superposition transmission processing, and common codebook-based modulation and coding processing on the traffic data of the AI task; and
> a third transmission mode (which may be referred to as a non-orthogonal transmission mode), where the third transmission mode indicates to perform at least one of quantization processing, modulation and coding processing, and processing using the identifier of the AI task on the traffic data of the AI task, and transmission resources of the at least two terminal devices in the third transmission mode are the same.

Specifically, in the access information that is of the AI task and that is indicated by the first information, the indicated transmission mode of the traffic data of the AI task includes at least one of the foregoing items, so that the network device can flexibly configure the transmission mode of the traffic data of the AI task, thereby improving flexibility of implementing the solution. In addition, transmission configuration parameters of different transmission modes are different. For example, a modulation and coding scheme MCS, a HARQ version, and the like need to be configured for the conventional transmission mode and the non-orthogonal transmission mode; and power control, a quantization modulation order, a transmit power threshold, and the like need to be configured for the analog transmission mode. The different transmission modes may be indicated by using different downlink control information formats. In addition, uplink and downlink transmission resources may be disclosed or jointly indicated.

For example, the second transmission mode may be used when a quantity of terminal devices that access the AI task is greater than or equal to a specific threshold (or when quality of a channel between the network device and the terminal device is lower than or equal to a specific threshold); the first transmission mode may be used when the quantity of accessed terminal devices is less than or equal to a specific threshold (when the quality of the channel between the network device and the terminal device is higher than or equal to a first threshold); or the third transmission mode is used when the quantity of accessed terminal devices is less than or equal to a specific threshold (when the quality of the channel between the network device and the terminal device is higher than or equal to a second threshold, where the first threshold is greater than the second threshold).

In a possible implementation, in the access information of the AI task, the uplink transmission configuration parameter indicated by the information H and/or the downlink transmission configuration parameter indicated by the information I that are described above include/includes at least one of the following: a modulation and coding scheme (modulation and coding scheme, MCS), a hybrid automatic repeat request (hybrid automatic repeat request, HARQ) version, power control and a quantization modulation order, and a transmit power threshold, so that the network device can flexibly configure the transmission configuration parameter of the AI task, thereby improving flexibility of implementing the solution.

Optionally, one or more of the information A to the information I described above may be carried through DCI scrambled by using the identifier of the AI task. To be specific, the first information received by the terminal device may be the DCI, and the one or more of the information A to the information I are determined by using the DCI.

Optionally, the one or more of the information A to the information I described above may be jointly indicated through other information and DCI scrambled by using the identifier of the AI task. The other information may include a radio resource control (radio resource control, RRC) message, a medium access control control element (medium access control control element, MAC CE), or the like. For example, when the first information sent by the network device indicates one of the information A to the information I, a group of values of the one item may be configured by using the RRC message or the MAC CE, and one of the values is activated/indicated through the DCI scrambled by using the identifier of the AI task, so that the terminal device can determine, based on the DCI, one of the values corresponding to the one item.

In a possible implementation, after that the terminal device determines the access information of the AI task based on the identifier of the AI task and the first information in step S302, the method may further include: The terminal device sends, based on the access information of the AI task, local traffic data corresponding to the AI task; and the terminal device receives fused traffic data corresponding to the AI task. Specifically, after the terminal device determines the access information of the AI task based on the identifier of the AI task, the terminal device may receive and send, based on the access information of the AI task, traffic data related to the AI task, so that the terminal device can access (or participate in) the AI task.

For example, that the AI task is a federated learning task is used as an example. The terminal device determines, based on the access information obtained in step S302, whether to participate in training of a current round of federated learning, for example, determines, by detecting an access condition indicated by the access information, whether the access condition is satisfied. If the access condition is satisfied, the terminal device may send, based on the access information of the AI task, the local traffic data corresponding to the AI task, and receive the fused traffic data corresponding to the AI task; or if the access condition is not satisfied, the terminal device may not perform a local training process corresponding to the AI task.

In an implementation example, the first information may be carried on a control channel, and the local traffic data corresponding to the AI task and the fused traffic data corresponding to the AI task may be carried on a traffic channel. That the AI task is federated learning is used as an example. As shown in FIG. 4, a control channel (federated learning control channel, FLCCH) and a traffic channel (federated learning traffic channel, FLTCH) that are used for transmission in the federated learning may be defined. The control channel may be mapped to an uplink unsourced random access channel (unsourced random access channel, URACH) and a downlink PDCCH scrambled by an FL-RNTI, that is, control information related to the AI task is transmitted through the URACH and the PDCCH. The traffic channel may be mapped to an uplink PUSCH and a downlink PDSCH, that is, traffic information related to the AI task is transmitted through the PUSCH and the PDSCH.

In a possible implementation, after that the terminal device receives the fused traffic data corresponding to the AI task, the method may further include: The terminal device sends indication information indicating that receiving of the fused traffic data is acknowledged, so that the network device can determine, based on the indication information, whether the terminal device successfully performs receiving, thereby helping the network device subsequently schedule, based on the indication information, one or more terminal devices participating in the AI task.

In a possible implementation, before that the terminal device sends, based on the access information, the local traffic data corresponding to the AI task, the method further includes: The terminal device sends indication information indicating that local training of the AI task is already completed; and the terminal device receives the indication information indicating to send the local traffic data. Specifically, the indication information indicating that the local training of the AI task is already completed and the indication information indicating to send the local traffic data are exchanged, so that the network device can determine an execution status of the local training of the terminal device, and schedule the terminal device based on the execution status.

In addition, in the foregoing exchanging process, when the network device determines that a quantity of terminal devices of which local training is already completed is greater than or equal to a threshold, the network device may schedule the terminal device to send the local traffic data, to ensure that a quantity of terminal devices that access the AI task satisfies a requirement of the threshold.

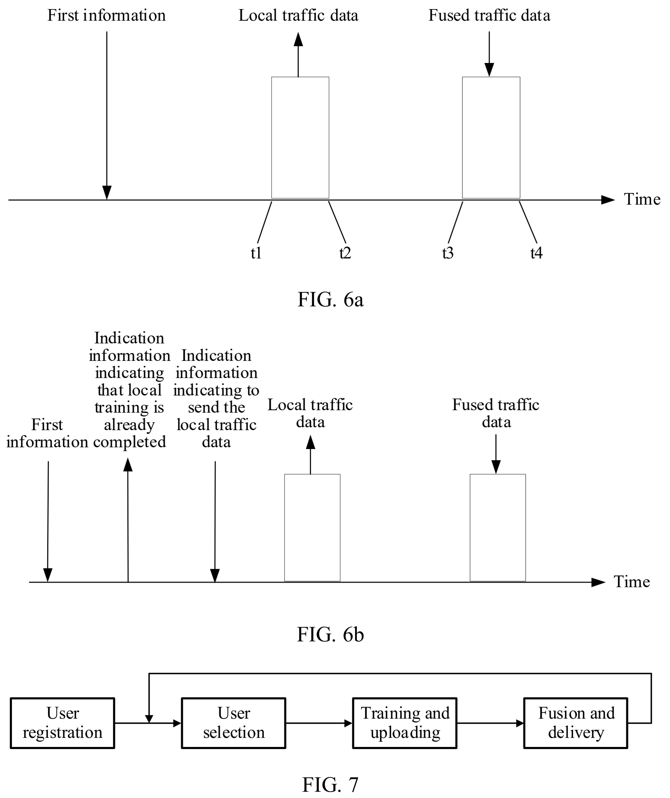

In an implementation example, the access information indicated by the network device by using the first information may be used to implement timing-based access. For example, when the access information indicated by the network device by using the first information includes the information A indicating the access condition of the AI task, and the information A includes the foregoing information (that is, the condition 4) indicating the start moment for accessing the AI task, the terminal device performs local training before the start moment arrives, to obtain the local traffic data, and starts to transmit the local traffic data when the start moment arrives. Similarly, for replacing the start moment corresponding to the condition 4 with the end moment corresponding to the condition 5, refer to the implementation process. This implementation example may be implemented by using FIG. 6a. To be specific, for the terminal device, after the terminal device receives the first information on a time axis, the terminal device may send the local traffic data at the start moment (for example, t1) indicated by the access information, and/or the terminal device may send the local traffic data before the end moment (for example, t2) indicated by the access information, and/or the terminal device may receive the fused traffic data at the start moment (for example, t3) indicated by the access information, and/or the terminal device may receive the fused traffic data before the end moment (for example, t4) indicated by the access information.

In another implementation example, the access information indicated by the network device by using the first information may be used to implement request-based access. For example, the access information indicated by the network device by using the first information may include the foregoing information indicating the condition 1 to the condition 3 (the foregoing information indicating the condition 4 may not be included, in other words, the network device may not pre-specify the start moment). Therefore, the terminal device that completes local training based on the first information and obtains the local traffic data may send, to the network device, the indication information indicating that receiving of the fused traffic data is acknowledged. The network device accumulates a quantity of terminal devices that already complete local training, and when the accumulated quantity reaches or exceeds a threshold, the network device indicates, by using the indication information indicating to send the local traffic data, the terminal device to report the local traffic data. This implementation example may be implemented by using FIG. 6b. To be specific, for the terminal device, after the terminal device receives the first information on a time axis, the terminal device may send, after performing local training, the indication information indicating that the local training is already completed, and after receiving, from the network device, the indication information indicating to send the local traffic data, the terminal device may send the local traffic data on a resource corresponding to the uplink resource configuration indicated by the access information, and/or the terminal device may receive the fused traffic data on a resource corresponding to the downlink resource configuration indicated by the access information.

In a possible implementation, before that the terminal device receives the first information, the method further includes: The terminal device receives indication information indicating to report capability information that participates in the AI task; and the terminal device sends second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size. Specifically, after the terminal device receives the indication information indicating to report the capability information that participates in the AI task, the terminal device may further send the second information indicating the communication capability information and/or the AI capability information, so that the network device can determine, based on the second information, capability information that is of the terminal device and that participates in the AI task, and determine the access information of the AI task based on capability information of one or more terminal devices, to perform scheduling by using the first information indicating the access information of the AI task.

In a possible implementation, before that terminal device receives the first information, the method further includes: The terminal device receives third information, where the third information indicates publishing information of the AI task, and the third information is obtained by processing the publishing information by using the identifier of the AI task; the terminal device sends fourth information, where the fourth information indicates to register with the AI task, and the fourth information includes at least one of the following: AI capability information of the terminal device (for example, the AI capability information includes at least one of AI model performance, an AI parameter, an AI gradient variance, and an AI dataset size), and an identifier of the terminal device. Specifically, the terminal device may further receive the third information indicating the publishing information of the AI task, and the third information is obtained by processing the publishing information by using the identifier of the AI task, so that after obtaining the publishing information based on the identifier of the AI task, the terminal device can send, to the network device, the fourth information indicating to register with the AI task, thereby implementing a publishing process and a registration process of the AI task by exchanging the third information and the fourth information.

Optionally, the method further includes: The terminal device receives indication information indicating that receiving of the fourth information is acknowledged. Specifically, the terminal device may further receive the indication information indicating that receiving of the fourth information is acknowledged, so that the terminal device determines, based on the indication information, whether the network device successfully receives the fourth information, and further the terminal device determines whether the terminal device successfully registers with the AI task.

Optionally, the publishing information indicated by the third information includes at least one of the following: the identifier of the AI task, a common codebook for reporting the user information, and indication information of a transmission resource. Specifically, the publishing information received by the terminal device may include at least one of the foregoing items, so that the terminal device can obtain related information of the AI task based on the at least one of the items, and send the fourth information based on the information, to implement the registration process of the AI task.

Optionally, the third information may alternatively not be obtained by processing the publishing information by using the identifier of the AI task, where the publishing information that is of the AI task and that is indicated by the third information may be used to determine the identifier of the AI task.

For example, when the publishing information indicated by the third information includes the identifier of the AI task, the terminal device may obtain the identifier of the AI task based on the publishing information.

For another example, the terminal device and the network device may preconfigure a mapping relationship between one or more time-frequency resources (for example, a specific frequency or a specific frequency band) and identifiers of one or more AI tasks. When the publishing information that is of the AI task and that is indicated by the third information includes the indication information of the transmission resource, the terminal device may determine the transmission resource based on the indication information, and then the terminal device may further determine the identifier of the AI task based on the mapping relationship.

For another example, the publishing information indicated by the third information may further include a task identifier (task ID) of the AI task. The terminal device and the network device may preconfigure a mapping relationship between one or more task IDs and identifiers of one or more AI tasks, so that the terminal device may determine the task ID based on the indication information, and then the terminal device may further determine the identifier of the AI task based on the task ID.

It may be understood that, in the foregoing publishing process and registration process, the network device publishes a federated learning task, and the terminal device reports information such as a capability, data, and participation/departure. In the publishing process, the network device delivers the federated learning task by using third information of a broadcast channel or a paging channel. The publishing information may include a task/model ID, an access resource for reporting user information, and the like (where the access resource or the task ID may be used to determine an RNTI for subsequent transmission of control information and data of the federated learning task, that is, an RNTI of the AI task; or the RNTI of the AI task may alternatively be delivered by the network device to the terminal device, and identifies the federated learning task).

For example, when the fourth information includes the AI capability information of the terminal device, a resource that carries the AI capability information of the terminal device may be determined by using the common codebook. To be specific, the terminal device may select, based on the AI capability information of the terminal device, a codeword in the common codebook for transmission, where the common codebook may include a plurality of codewords constructed by using a Gaussian codebook or the like, and a codeword index may form a mapping relationship with the AI capability information of the terminal device, so that the network device may determine the AI capability information of the terminal device based on a detected transmission codeword. For example, a transmission format of information is shown in FIG. 5. A first transmission format may be "direct transmission" in FIG. 5. To be specific, the terminal device selects a codeword in the common codebook to identify the terminal device, and the AI capability information (briefly referred to as information in FIG. 5) is attached to the codeword and transmitted in a conventional manner (transmission in the conventional manner may be transmission performed after processing processes such as channel coding and modulation are performed on the information). A second transmission format may be "sequential transmission" in FIG. 5. To be specific, the common codebook may not only identify the terminal device, but also indicate the AI capability information of the terminal device, where the identifier of the terminal device is indicated by using the common codebook, to be specific, one codeword corresponds to one identifier; and the capability information is also indicated by using the common codebook, to be specific, one codeword corresponds to one capability level. Afterwards, the network device detects a sent codeword in the received fourth information, and acknowledges each terminal device by using a codeword ID. Optionally, the codebook and the ID may be shared by a plurality of terminal devices, in other words, different federated learning tasks may share a same codebook and ID.

In an implementation example, that the AI task is federated learning is used as an example. As shown in FIG. 7, an exchanging process of the third information and the fourth information described above may be referred to as "user registration", an exchanging process of the first information indicating the access information of the AI task may be referred to as "user selection", a process in which the terminal device determines and sends the local traffic data may be referred to as "training and uploading", and a process in which the network device determines and sends the fused traffic data may be referred to as "fusion and delivery". In FIG. 7, the terminal device may register with the AI task by using a user registration process, and subsequently perform a round of "user selection, training and uploading, and fusion and delivery" process to complete a round of learning process of federated learning. After the round of learning process is completed, the access information may need to be changed in a next round of federated learning process. Therefore, the network device and the terminal device may perform a "user selection, training and uploading, and fusion and delivery" process of a next round of learning until the federated learning task ends.

Based on the technical solution shown in FIG. 3, after the terminal device receives the first information indicating the access information of the AI task, the terminal device may determine the access information of the AI task based on the identifier of the AI task, where the first information is obtained by processing the access information of the AI task by using the identifier of the AI task. In other words, when a network device indicates the access information of the AI task by using the first information, the terminal device may obtain the access information of the AI task from the first information by using the identifier of the AI task, so that the terminal device can subsequently access the AI task based on the access information of the AI task, and further a computing capability of the terminal device can be used for the AI task, to implement execution of the AI task in a communication network.

In addition, the first information sent by the network device is processed by using the identifier of the AI task. After the terminal device receives the first information, the terminal device can obtain the access information of the AI task by using the identifier of the AI task. Therefore, when a quantity of terminal devices is greater than one, different terminal devices all can obtain the access information of the AI task by using the identifier of the AI task, thereby reducing implementation complexity and improving efficiency.

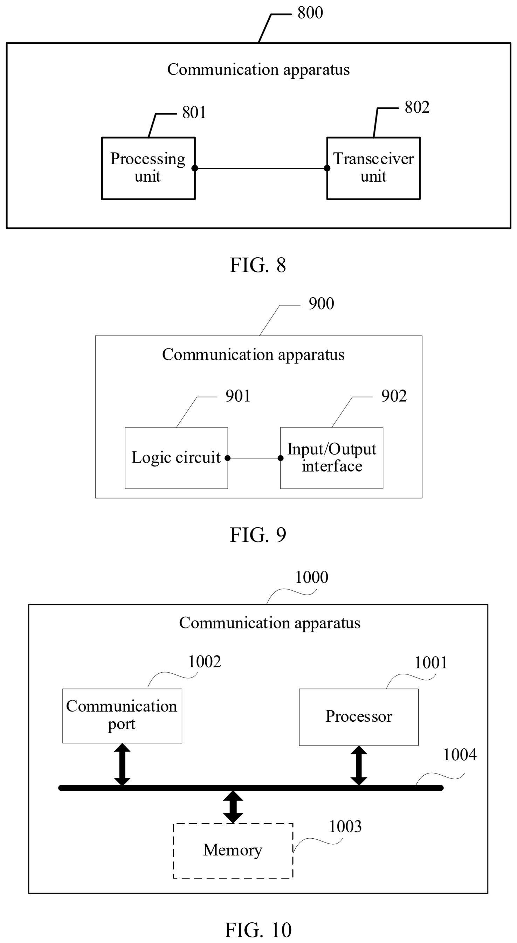

Refer to FIG. 8. An embodiment of this application provides a communication apparatus 800. The communication apparatus 800 can implement a function of the terminal device or the network device in the foregoing method embodiments, and therefore can also achieve beneficial effects of the foregoing method embodiments. In this embodiment of this application, the communication apparatus 800 may be the terminal device or the network device, or may be an integrated circuit, an element, or the like inside the terminal device or the network device, for example, a chip. In the following embodiments, an example in which the communication apparatus 800 is the terminal device or the network device is used for description.

In a possible implementation, when the apparatus 800 is configured to perform the method performed by the terminal device in any one of the foregoing embodiments, the apparatus 800 includes a processing unit 801 and a transceiver unit 802. The transceiver unit 802 is configured to receive first information, where the first information indicates access information of an AI task, and the first information is obtained by processing the access information of the AI task by using an identifier of the AI task. The processing unit 801 is configured to determine the access information of the AI task based on the identifier of the AI task and the first information.

In a possible implementation, the access information of the AI task includes at least one of the following: information indicating an access condition of the AI task; information indicating an information update periodicity of the AI task; information indicating a training periodicity of the AI task; information indicating an uplink resource configuration of traffic data of the AI task; information indicating a downlink resource configuration of the traffic data of the AI task; information indicating a codebook of the traffic data of the AI task; information indicating a transmission mode of the traffic data of the AI task; information indicating an uplink transmission parameter of the traffic data of the AI task; and information indicating a downlink transmission parameter of the traffic data of the AI task.

In a possible implementation, the information indicating the access condition of the AI task includes at least one of the following:

an identifier range of a terminal device that accesses the AI task; a random number threshold for accessing the AI task; a performance indicator threshold for accessing the AI task; a start moment for accessing the AI task; and an end moment for accessing the AI task.

In a possible implementation, the transmission mode of the traffic data of the AI task includes any one of the following:

a first transmission mode, where the first transmission mode indicates to perform at least one of quantization processing, modulation and coding processing, and processing using the identifier of the AI task on the traffic data of the AI task, and transmission resources of at least two terminal devices in the first transmission mode are orthogonal;
a second transmission mode, where the second transmission mode indicates to perform at least one of third-order quantization modulation processing, pre-equalization superposition transmission processing, and common codebook-based modulation and coding processing on the traffic data of the AI task; and
a third transmission mode, where the third transmission mode indicates to perform at least one of quantization processing, modulation and coding processing, and processing using the identifier of the AI task on the traffic data of the AI task, and transmission resources of at least two terminal devices in the third transmission mode are the same.

In a possible implementation, the uplink transmission configuration parameter and/or the downlink transmission configuration parameter include/includes at least one of the following:

a modulation and coding scheme MCS, a hybrid automatic repeat request HARQ version, power control and a quantization modulation order, and a transmit power threshold.

In a possible implementation, the transceiver unit 802 is further configured to send, based on the access information of the AI task, local traffic data corresponding to the AI task; and the transceiver unit 802 is further configured to receive fused traffic data corresponding to the AI task.

In a possible implementation, the transceiver unit 802 is further configured to send indication information indicating that receiving of the fused traffic data is acknowledged.

In a possible implementation, the transceiver unit 802 is further configured to send indication information indicating that local training of the AI task is already completed; and the transceiver unit 802 is further configured to receive indication information indicating to send the local traffic data.

In a possible implementation, the identifier of the AI task is a radio network temporary identifier RNTI associated with the AI task.

In a possible implementation, the transceiver unit 802 is further configured to receive indication information indicating to report capability information that participates in the AI task; and the transceiver unit 802 is further configured to send second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size.

In a possible implementation, the transceiver unit 802 is further configured to receive third information, where the third information indicates publishing information of the AI task, and the third information is obtained by processing the publishing information by using the identifier of the AI task; and the transceiver unit 802 is further configured to send fourth information, where the fourth information indicates to register with the AI task, and the fourth information includes at least one of the following: AI capability information of the terminal device and an identifier of the terminal device.

In a possible implementation, the transceiver unit 802 is further configured to send indication information indicating that receiving of the fourth information is acknowledged.

In a possible implementation, the publishing information includes at least one of the following: the identifier of the AI task, a common codebook for reporting user information, and indication information of a transmission resource.

In a possible implementation, when the apparatus 800 is configured to perform the method performed by the network device in any one of the foregoing embodiments, the apparatus 800 includes a processing unit 801 and a transceiver unit 802. The transceiver unit 802 is configured to determine first information, where the first information indicates access information of an artificial intelligence AI task, and the first information is obtained by processing the access information of the AI task by using the identifier of the AI task. The transceiver unit 802 is configured to send the first information.

In a possible implementation, the access information of the AI task includes at least one of the following: information indicating an access condition of the AI task; information indicating an information update periodicity of the AI task; information indicating a training periodicity of the AI task; information indicating an uplink resource configuration of traffic data of the AI task; information indicating a downlink resource configuration of the traffic data of the AI task; information indicating a codebook of the traffic data of the AI task; information indicating a transmission mode of the traffic data of the AI task; information indicating an uplink transmission parameter of the traffic data of the AI task; and information indicating a downlink transmission parameter of the traffic data of the AI task.

In a possible implementation, the information indicating the access condition of the AI task includes at least one of the following:

an identifier range of a terminal device that accesses the AI task; a random number threshold for accessing the AI task; a performance indicator threshold for accessing the AI task; a start moment for accessing the AI task; and an end moment for accessing the AI task.

In a possible implementation, the transmission mode of the traffic data of the AI task includes any one of the following:

a first transmission mode, where the first transmission mode indicates to perform at least one of quantization processing, modulation and coding processing, and processing using the identifier of the AI task on the traffic data of the AI task, and transmission resources of at least two terminal devices in the first transmission mode are orthogonal;
a second transmission mode, where the second transmission mode indicates to perform at least one of third-order quantization modulation processing, pre-equalization superposition transmission processing, and common codebook-based modulation and coding processing on the traffic data of the AI task; and
a third transmission mode, where the third transmission mode indicates to perform at least one of quantization processing, modulation and coding processing, and processing using the identifier of the AI task on the traffic data of the AI task, and transmission resources of at least two terminal devices in the third transmission mode are the same.

In a possible implementation, the uplink transmission configuration parameter and/or the downlink transmission configuration parameter include/includes at least one of the following: a modulation and coding scheme MCS, a hybrid automatic repeat request HARQ version, power control and a quantization modulation order, and a transmit power threshold.

In a possible implementation, the transceiver unit 802 is further configured to receive local traffic data corresponding to the AI task; and the transceiver unit 802 is further configured to send fused traffic data corresponding to the AI task.

In a possible implementation, the transceiver unit 802 is further configured to receive indication information indicating that receiving of the fused traffic data is acknowledged.

In a possible implementation, the transceiver unit 802 is further configured to receive indication information indicating that local training of the AI task is already completed; and the transceiver unit 802 is further configured to send indication information indicating to send the local traffic data.

In a possible implementation, the identifier of the AI task is a radio network temporary identifier RNTI associated with the AI task.

In a possible implementation, the transceiver unit 802 is further configured to send indication information indicating to report capability information that participates in the AI task; and the transceiver unit 802 is further configured to receive second information, where the second information indicates communication capability information and/or AI capability information, the communication capability information includes at least one of channel information and communication frequency information, and the AI capability information includes at least one of AI model performance, an AI parameter, an AI gradient variance, and an AI dataset size.

In a possible implementation, the transceiver unit 802 is further configured to send third information, where the third information indicates publishing information of the AI task, and the third information is obtained by processing the publishing information by using the identifier of the AI task; and the transceiver unit 802 is further configured to receive fourth information, where the fourth information indicates to register with the AI task, and the fourth information includes at least one of the following: AI capability information of the terminal device and an identifier of the terminal device.

In a possible implementation, the publishing information includes at least one of the following: the identifier of the AI task, a common codebook for reporting user information, and indication information of a transmission resource.

It should be noted that for details of content such as an information execution process of the unit of the communication apparatus 800, refer to the descriptions in the foregoing method embodiments of this application. Details are not described herein again.

FIG. 9 is another diagram of a structure of a communication apparatus 900 according to this application. The communication apparatus 900 includes at least an input/output interface 902. The communication apparatus 900 may be a chip or an integrated circuit.

Optionally, the communication apparatus further includes a logic circuit 901.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the input/output interface 902 is configured to receive first information, where the first information indicates access information of an AI task, and the first information is obtained by processing the access information of the AI task by using an identifier of the AI task; and the logic circuit 901 is configured to determine the access information of the AI task based on the identifier of the AI task and the first information.

Optionally, the logic circuit 901 is configured to determine first information, where the first information indicates access information of an AI task, and the first information is obtained by processing the access information of the AI task by using an identifier of the AI task; and the input/output interface 902 is configured to send the first information.

The logic circuit 901 and the input/output interface 902 may further perform other steps performed by the terminal device or the network device in any embodiment, and achieve corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. Some or all of functions of the processing apparatus may be implemented through software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), systems on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

FIG. 10 shows a communication apparatus 1000 in the foregoing embodiment according to an embodiment of this application. The communication apparatus 1000 may be specifically the communication apparatus used as the terminal device in the foregoing embodiment. The communication apparatus 1000 shown in FIG. 10 may be the terminal device or a component in the terminal device.

In a possible diagram of a logical structure of the communication apparatus 1000, the communication apparatus 1000 may include but is not limited to at least one processor 1001 and a communication port 1002.

Further, optionally, the apparatus may further include at least one of a memory 1003 and a bus 1004. In this embodiment of this application, the at least one processor 1001 is configured to control and process an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logic blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1000 shown in FIG. 10 may be specifically configured to implement steps implemented by the terminal device in the foregoing method embodiments, and implement technical effects corresponding to the terminal device. For a specific implementation of the communication apparatus shown in FIG. 10, refer to the descriptions in the foregoing method embodiments. Details are not described herein again.

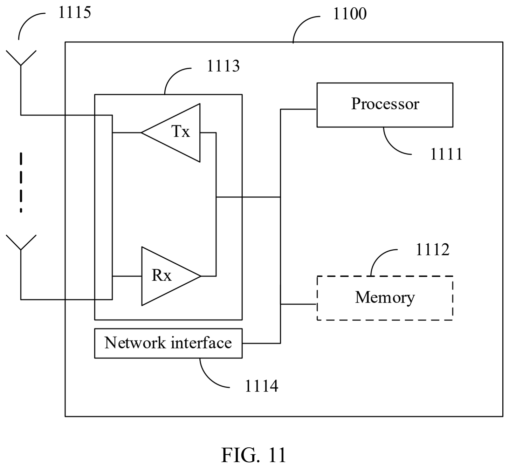

FIG. 11 is a diagram of a structure of a communication apparatus 1100 in the foregoing embodiment according to an embodiment of this application. The communication apparatus 1100 may be specifically the communication apparatus used as the network device in the foregoing embodiment. The communication apparatus 1100 shown in FIG. 11 may be the network device or a component in the network device. For a structure of the communication apparatus, refer to the structure shown in FIG. 11.

The communication apparatus 1100 includes at least one processor 1111 and at least one network interface 1114. Further, optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various types of interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. The processor 1111 in FIG. 11 may integrate functions of the baseband processor and the central processing unit. A person skilled in the art may understand that the baseband processor and the central processing unit may be processors independent of each other, and are interconnected by using a technology, for example, a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into a chip. The memory 1112 can store program code for executing the technical solutions in embodiments of this application, and the processor 1111 controls the execution. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to: receive the radio frequency signal from the antenna, convert the radio frequency signal into a digital baseband signal or a digital intermediate frequency signal, and provide the digital baseband signal or the digital intermediate frequency signal to the processor 1111, so that the processor 1111 performs further processing, for example, demodulation and decoding, on the digital baseband signal or the digital intermediate frequency signal. In addition, the transmitter Tx of the transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter Tx may selectively perform one-level or multi-level up mixing processing and digital-to-analog conversion processing on the modulated digital baseband signal or digital intermediate frequency signal, to obtain a radio frequency signal. A sequence of the up mixing processing and the digital-to-analog conversion processing is adjustable. The digital baseband signal and the digital intermediate frequency signal may be collectively referred to as a digital signal.

The transceiver 1113 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver machine, an input interface, a receiver circuit, or the like. The sending unit may be referred to as a transmitter machine, a transmitter, a transmitter circuit, or the like.

It should be noted that the communication apparatus 1100 shown in FIG. 11 may be specifically configured to: implement steps implemented by the network device in the foregoing method embodiments, and implement technical effects corresponding to the network device. For a specific implementation of the communication apparatus 1100 shown in FIG. 11, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may specifically be the terminal device or the network device in the foregoing method embodiments.

An embodiment of this application further provides a communication system. An architecture of the communication system includes the terminal device and the network device in any one of the foregoing embodiments.

In the several embodiments provided in this application, it should be understood that the disclosed system, apparatus, and method may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making contribution, or all or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

**Claims**

1.  A communication method, comprising:

    receiving first information, wherein the first information indicates access information of an artificial intelligence AI task, and the first information is obtained by processing the access information of the AI task by using an identifier of the AI task; and
    determining the access information of the AI task based on the identifier of the AI task and the first information.

2.  The method according to claim 1, wherein the access information of the AI task comprises at least one of the following:

    information indicating an access condition of the AI task;
    information indicating an information update periodicity of the AI task;
    information indicating a training periodicity of the AI task;
    information indicating an uplink resource configuration of traffic data of the AI task;
    information indicating a downlink resource configuration of the traffic data of the AI task;
    information indicating a codebook of the traffic data of the AI task;
    information indicating a transmission mode of the traffic data of the AI task;
    information indicating an uplink transmission parameter of the traffic data of the AI task; and
    information indicating a downlink transmission parameter of the traffic data of the AI task.

3.  The method according to claim 2, wherein the information indicating the access condition of the AI task comprises at least one of the following:

    an identifier range of a terminal device that accesses the AI task;
    a random number threshold for accessing the AI task;

    a performance indicator threshold for accessing the AI task;
    a start moment for accessing the AI task; and
    an end moment for accessing the AI task.

4.  The method according to claim 2 or 3, wherein the transmission mode of the traffic data of the AI task comprises any one of the following:

    a first transmission mode, wherein the first transmission mode indicates to perform at least one of quantization processing, modulation and coding processing, and processing using the identifier of the AI task on the traffic data of the AI task, and transmission resources of at least two terminal devices in the first transmission mode are orthogonal;
    a second transmission mode, wherein the second transmission mode indicates to perform at least one of third-order quantization modulation processing, pre-equalization superposition transmission processing, and common codebook-based modulation and coding processing on the traffic data of the AI task; and
    a third transmission mode, wherein the third transmission mode indicates to perform at least one of quantization processing, modulation and coding processing, and processing using the identifier of the AI task on the traffic data of the AI task, and transmission resources of at least two terminal devices in the third transmission mode are the same.

5.  The method according to any one of claims 2 to 4, wherein the uplink transmission configuration parameter and/or the downlink transmission configuration parameter comprise/comprises at least one of the following:
    a modulation and coding scheme MCS, a hybrid automatic repeat request HARQ version, power control and a quantization modulation order, and a transmit power threshold.

6.  The method according to any one of claims 1 to 5, wherein after determining the access information of the AI task based on the identifier of the AI task and the first information, the method further comprises:

    sending, based on the access information of the AI task, local traffic data corresponding to the AI task; and
    receiving fused traffic data corresponding to the AI task.

7.  The method according to claim 6, wherein before sending, based on the access information, the local traffic data corresponding to the AI task, the method further comprises:

sending indication information indicating that local training of the AI task is already completed; and

receiving indication information indicating to send the local traffic data.

8. The method according to any one of claims 1 to 7, wherein the identifier of the AI task is a radio network temporary identifier RNTI associated with the AI task.

9. The method according to any one of claims 1 to 8, wherein before receiving the first information, the method further comprises:

receiving indication information indicating to report capability information that participates in the AI task; and

sending second information, wherein the second information indicates communication capability information and/or AI capability information, the communication capability information comprises at least one of channel information and communication frequency information, and the AI capability information comprises at least one of AI model performance, an AI parameter, an AI gradient variance, and an AI dataset size.

10. The method according to any one of claims 1 to 9, wherein before receiving the first information, the method further comprises:

receiving third information, wherein the third information indicates publishing information of the AI task, and the third information is obtained by processing the publishing information by using the identifier of the AI task; and

sending fourth information, wherein the fourth information indicates to register with the AI task, and the fourth information comprises at least one of the following: AI capability information of the terminal device and an identifier of the terminal device.

11. The method according to claim 10, wherein the publishing information comprises at least one of the following:

the identifier of the AI task, a common codebook for reporting user information, and indication information of a transmission resource.

12. A communication method, comprising:

determining first information, wherein the first information indicates access information of an artificial intelligence AI task, and the first information is obtained by processing the access information of the AI task by using an identifier of the AI task; and
sending the first information.

13. The method according to claim 12, wherein the access information of the AI task comprises at least one of the following:

information indicating an access condition of the AI task;

information indicating an information update periodicity of the AI task;

information indicating a training periodicity of the AI task;

information indicating an uplink resource configuration of traffic data of the AI task;

information indicating a downlink resource configuration of the traffic data of the AI task;

information indicating a codebook of the traffic data of the AI task;

information indicating a transmission mode of the traffic data of the AI task;

information indicating an uplink transmission parameter of the traffic data of the AI task; and

information indicating a downlink transmission parameter of the traffic data of the AI task.

14. The method according to claim 13, wherein the information indicating the access condition of the AI task comprises at least one of the following:

an identifier range of a terminal device that accesses the AI task;

a random number threshold for accessing the AI task;

a performance indicator threshold for accessing the AI task;

a start moment for accessing the AI task; and

an end moment for accessing the AI task.

15. The method according to claim 13 or 14, wherein the transmission mode of the traffic data of the AI task comprises any one of the following:

a first transmission mode, wherein the first transmission mode indicates to perform at least one of quantization processing, modulation and coding processing, and processing using the identifier of the AI task on the traffic data of the AI task, and transmission resources of at least two terminal devices in the first transmission mode are orthogonal;

a second transmission mode, wherein the second transmission mode indicates to perform at least one of third-order quantization modulation processing, pre-equalization superposition transmission processing, and common codebook-based modulation and coding processing on the traffic data of the AI task; and

a third transmission mode, wherein the third transmission mode indicates to perform at least one of quantization processing, modulation and coding processing, and processing using the identifier of the AI task on the traffic data of the AI task, and transmission resources of at least two terminal devices in the third transmission mode are the same.

16. The method according to any one of claims 13 to 15, wherein the uplink transmission configuration parameter and/or the downlink transmission configuration parameter comprise/comprises at least one of the following:
a modulation and coding scheme MCS, a hybrid automatic repeat request HARQ version, power control and a quantization modulation order, and a transmit power threshold.

17. The method according to any one of claims 12 to 16, wherein after sending the first information, the method further comprises:

receiving local traffic data corresponding to the AI task; and
sending fused traffic data corresponding to the AI task.

18. The method according to claim 17, wherein before receiving the local traffic data corresponding to the AI task, the method further comprises:

receiving indication information indicating that local training of the AI task is already completed; and
sending indication information indicating to send the local traffic data.

19. The method according to any one of claims 12 to 18, wherein the identifier of the AI task is a radio network temporary identifier RNTI associated with the AI task.

20. The method according to any one of claims 12 to 19, wherein before sending the first information, the method further comprises:

sending indication information indicating to report capability information that participates in the AI task; and
receiving second information, wherein the second information indicates communication capability information and/or AI capability information, the communication capability information comprises at least one of channel information and communication frequency information, and the AI capability information comprises at least one of AI model performance, an AI parameter, an AI gradient variance, and an AI dataset size.

21. The method according to any one of claims 12 to 20, wherein before sending the first information, the method further comprises:

sending third information, wherein the third information indicates publishing information of the AI task, and the third information is obtained by processing the publishing information by using the identifier of the AI task; and
receiving fourth information, wherein the fourth information indicates to register with the AI task, and the fourth information comprises at least one of the following: AI capability information of the terminal device and an identifier of the terminal device.

22. The method according to claim 21, wherein the publishing information comprises at least one of the following:
the identifier of the AI task, a common codebook for reporting user information, and indication information of a transmission resource.

23. A communication apparatus, comprising a processing unit and a transceiver unit, wherein the transceiver unit is configured to receive first information, wherein the first information indicates access information of an artificial intelligence AI task, and the first information is obtained by processing the access information of the AI task by using an identifier of the AI task; and
the processing unit is configured to determine the access information of the AI task based on the identifier of the AI task and the first information.

24. The apparatus according to claim 23, wherein the access information of the AI task comprises at least one of the following:

information indicating an access condition of the AI task;
information indicating an information update periodicity of the AI task;
information indicating a training periodicity of the AI task;
information indicating an uplink resource configuration of traffic data of the AI task;
information indicating a downlink resource configuration of the traffic data of the AI task;
information indicating a codebook of the traffic data of the AI task;
information indicating a transmission mode of the traffic data of the AI task;
information indicating an uplink transmission parameter of the traffic data of the AI task; and
information indicating a downlink transmission parameter of the traffic data of the AI task.

**25.** The apparatus according to claim 24, wherein the information indicating the access condition of the AI task comprises at least one of the following:

an identifier range of a terminal device that accesses the AI task;
a random number threshold for accessing the AI task;
a performance indicator threshold for accessing the AI task;
a start moment for accessing the AI task; and
an end moment for accessing the AI task.

**26.** The apparatus according to claim 24 or 25, wherein the transmission mode of the traffic data of the AI task comprises any one of the following:

a first transmission mode, wherein the first transmission mode indicates to perform at least one of quantization processing, modulation and coding processing, and processing using the identifier of the AI task on the traffic data of the AI task, and transmission resources of at least two terminal devices in the first transmission mode are orthogonal;
a second transmission mode, wherein the second transmission mode indicates to perform at least one of third-order quantization modulation processing, pre-equalization superposition transmission processing, and common codebook-based modulation and coding processing on the traffic data of the AI task; and
a third transmission mode, wherein the third transmission mode indicates to perform at least one of quantization processing, modulation and coding processing, and processing using the identifier of the AI task on the traffic data of the AI task, and transmission resources of at least two terminal devices in the third transmission mode are the same.

**27.** The apparatus according to any one of claims 24 to 26, wherein the uplink transmission configuration parameter and/or the downlink transmission configuration parameter comprise/comprises at least one of the following:
a modulation and coding scheme MCS, a hybrid automatic repeat request HARQ version, power control and a quantization modulation order, and a transmit power threshold.

**28.** The apparatus according to any one of claims 23 to 27, wherein

the transceiver unit is further configured to send, based on the access information of the AI task,
local traffic data corresponding to the AI task; and
the transceiver unit is further configured to receive fused traffic data corresponding to the AI task.

**29.** The apparatus according to claim 28, wherein

the transceiver unit is further configured to send indication information indicating that local training of the AI task is already completed; and
the transceiver unit is further configured to receive indication information indicating to send the local traffic data.

**30.** The apparatus according to any one of claims 23 to 29, wherein the identifier of the AI task is a radio network temporary identifier RNTI associated with the AI task.

**31.** The apparatus according to any one of claims 23 to 30, wherein

the transceiver unit is further configured to receive indication information indicating to report capability information that participates in the AI task; and
the transceiver unit is further configured to send second information, wherein the second information indicates communication capability information and/or AI capability information, the communication capability information comprises at least one of channel information and communication frequency information, and the AI capability information comprises at least one of AI model performance, an AI parameter, an AI gradient variance, and an AI dataset size.

**32.** The apparatus according to any one of claims 23 to 31, wherein

the transceiver unit is further configured to receive third information, wherein the third information indicates publishing information of the AI task, and the third information is obtained by processing the publishing information by using the identifier of the AI task; and
the transceiver unit is further configured to send fourth information, wherein the fourth information indicates to register with the AI task, and the fourth information comprises at least one of the following: AI capability information of the terminal device and an identifier of the terminal device.

**33.** The apparatus according to claim 32, wherein the publishing information comprises at least one of the following:

the identifier of the AI task, a common codebook for reporting user information, and indication information of a transmission resource.

34. A communication apparatus, comprising a processing unit and a transceiver unit, wherein the transceiver unit is configured to determine first information, wherein the first information indicates access information of an artificial intelligence AI task, and the first information is obtained by processing the access information of the AI task by using an identifier of the AI task; and
the transceiver unit is configured to send the first information.

35. The apparatus according to claim 34, wherein the access information of the AI task comprises at least one of the following:

information indicating an access condition of the AI task;
information indicating an information update periodicity of the AI task;
information indicating a training periodicity of the AI task;
information indicating an uplink resource configuration of traffic data of the AI task;
information indicating a downlink resource configuration of the traffic data of the AI task;
information indicating a codebook of the traffic data of the AI task;
information indicating a transmission mode of the traffic data of the AI task;
information indicating an uplink transmission parameter of the traffic data of the AI task; and
information indicating a downlink transmission parameter of the traffic data of the AI task.

36. The apparatus according to claim 35, wherein the information indicating the access condition of the AI task comprises at least one of the following:

an identifier range of a terminal device that accesses the AI task;
a random number threshold for accessing the AI task;
a performance indicator threshold for accessing the AI task;
a start moment for accessing the AI task; and
an end moment for accessing the AI task.

37. The apparatus according to claim 35 or 36, wherein the transmission mode of the traffic data of the AI task comprises any one of the following:

a first transmission mode, wherein the first transmission mode indicates to perform at least one of quantization processing, modulation and coding processing, and processing using the identifier of the AI task on the traffic data of the AI task, and transmission resources of at least two terminal devices in the first transmission mode are orthogonal;
a second transmission mode, wherein the second transmission mode indicates to perform at least one of third-order quantization modulation processing, pre-equalization superposition transmission processing, and common codebook-based modulation and coding processing on the traffic data of the AI task; and
a third transmission mode, wherein the third transmission mode indicates to perform at least one of quantization processing, modulation and coding processing, and processing using the identifier of the AI task on the traffic data of the AI task, and transmission resources of at least two terminal devices in the third transmission mode are the same.

38. The apparatus according to any one of claims 35 to 37, wherein the uplink transmission configuration parameter and/or the downlink transmission configuration parameter comprise/comprises at least one of the following:
a modulation and coding scheme MCS, a hybrid automatic repeat request HARQ version, power control and a quantization modulation order, and a transmit power threshold.

39. The apparatus according to any one of claims 34 to 38, wherein

the transceiver unit is further configured to receive local traffic data corresponding to the AI task; and
the transceiver unit is further configured to send fused traffic data corresponding to the AI task.

40. The apparatus according to claim 39, wherein

the transceiver unit is further configured to receive indication information indicating that local training of the AI task is already completed; and
the transceiver unit is further configured to send indication information indicating to send the local traffic data.

41. The apparatus according to any one of claims 34 to 40, wherein the identifier of the AI task is a radio network temporary identifier RNTI associated with the AI task.

42. The apparatus according to any one of claims 34 to 41, wherein

the transceiver unit is further configured to send indication information indicating to report capability information that participates in the AI task; and

the transceiver unit is further configured to receive second information, wherein the second information indicates communication capability information and/or AI capability information, the communication capability information comprises at least one of channel information and communication frequency information, and the AI capability information comprises at least one of AI model performance, an AI parameter, an AI gradient variance, and an AI dataset size.

43. The apparatus according to any one of claims 34 to 42, wherein

the transceiver unit is further configured to send third information, wherein the third information indicates publishing information of the AI task, and the third information is obtained by processing the publishing information by using the identifier of the AI task; and
the transceiver unit is further configured to receive fourth information, wherein the fourth information indicates to register with the AI task, and the fourth information comprises at least one of the following: AI capability information of the terminal device and an identifier of the terminal device.

44. The apparatus according to claim 43, wherein the publishing information comprises at least one of the following:
the identifier of the AI task, a common codebook for reporting user information, and indication information of a transmission resource.

45. A communication apparatus, comprising at least one processor, wherein the at least one processor is coupled to a memory; and
the at least one processor is configured to perform the method according to any one of claims 1 to 11.

46. A communication apparatus, comprising at least one processor, wherein the at least one processor is coupled to a memory; and
the at least one processor is configured to perform the method according to any one of claims 12 to 22.

47. A communication system, wherein

the system comprises the communication apparatus according to the method in any one of claims 23 to 33 and the communication apparatus according to the method in any one of claims 34 to 44; or
the system comprises the communication apparatus according to claim 45 and the communication apparatus according to claim 46.

48. A computer-readable storage medium, wherein the medium stores instructions, and when the instructions are executed by a computer, the method according to any one of claims 1 to 22 is implemented.

49. A computer program product, comprising instructions, wherein when the instructions are run on a computer, the computer is enabled to perform the method according to any one of claims 1 to 22.

FIG. 1a

FIG. 1b

FIG. 2a

FIG. 2b

Network
device

Terminal
device

S301: First information

S302: Determine access information of an AI task
based on an identifier of the AI task and the first
information

FIG. 3

FLCCH

FLTCH

URACH

PDCCH

PUSCH

PDSCH

FIG. 4

Direct
transmission

Common codebook

Information

Sequential
transmission

Common codebook

Information

FIG. 5

First information        Local traffic data        Fused traffic data

Time

t1          t2          t3          t4

FIG. 6a

Indication
information
indicating       Indication
that local       information
training is    indicating to
First         already      send the
information    completed    local traffic
data

Local traffic
data

Fused traffic
data

Time

FIG. 6b

| User registration | | User selection | | Training and uploading | | Fusion and delivery |

FIG. 7

800

Communication apparatus

801

Processing unit

802

Transceiver unit

FIG. 8

900

Communication apparatus

901

Logic circuit

902

Input/Output interface

FIG. 9

1000

Communication apparatus

1002

Communication port

1001

Processor

1004

1003

Memory

FIG. 10

FIG. 11

## INTERNATIONAL SEARCH REPORT

International application No.

**PCT/CN2023/107434**

| A. | CLASSIFICATION OF SUBJECT MATTER |
|---|---|

H04W72/044(2023.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, DWPI: 标识, 人工智能, 任务, 接入, AI, identification, Artificial Intelligence, task, access

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116208975 A (HUAWEI TECHNOLOGIES CO., LTD.) 02 June 2023 (2023-06-02) description, paragraphs [0160]-[0194], and figure 3 | 1-3, 5-14, 16-25, 27-36, 38-49 |
| X | CN 116208976 A (HUAWEI TECHNOLOGIES CO., LTD.) 02 June 2023 (2023-06-02) description, paragraphs [0142]-[0180], and figure 3 | 1-3, 5-14, 16-25, 27-36, 38-49 |
| A | WO 2023103390 A1 (BEIJING BAIDU NETCOM SCIENCE AND TECHNOLOGY CO., LTD.) 15 June 2023 (2023-06-15) entire document | 1-49 |
| A | WO 2023066288 A1 (VIVO MOBILE COMMUNICATION CO., LTD.) 27 April 2023 (2023-04-27) entire document | 1-49 |
| A | WO 2022025303 A1 (LG ELECTRONICS, INC.) 03 February 2022 (2022-02-03) entire document | 1-49 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 March 2024** | **20 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/107434**

| Patent document cited in search report | | | Publication date (day/month/year) | Patent family member(s) | | | Publication date (day/month/year) |
|---|---|---|---|---|---|---|---|
| CN | 116208975 | A | 02 June 2023 | WO | 2023098665 | A1 | 08 June 2023 |
| CN | 116208976 | A | 02 June 2023 | WO | 2023098673 | A1 | 08 June 2023 |
| WO | 2023103390 | A1 | 15 June 2023 | CN | 114201278 | A | 18 March 2022 |
| WO | 2023066288 | A1 | 27 April 2023 | CN | 116017493 | A | 25 April 2023 |
| WO | 2022025303 | A1 | 03 February 2022 | | None | | |

Form PCT/ISA/210 (patent family annex) (July 2022)